(19) Europäisches Patentamt
European Patent Office
Office européen des brevets

(11) EP 4 729 294 A1

(12) **EUROPEAN PATENT APPLICATION**
published in accordance with Art. 153(4) EPC

(43) Date of publication:
**22.04.2026 Bulletin 2026/17**

(21) Application number: **24831435.3**

(22) Date of filing: **13.05.2024**

(51) International Patent Classification (IPC):
***B32B 27/00*** *(2006.01)* ***B32B 3/26*** *(2006.01)*
***B32B 7/022*** *(2019.01)* ***C09J 7/26*** *(2018.01)*
***C09J 7/29*** *(2018.01)* ***C09J 201/00*** *(2006.01)*

(52) Cooperative Patent Classification (CPC):
**B32B 3/26; B32B 7/02; B32B 7/022; B32B 27/00; C09J 7/26; C09J 7/29; C09J 201/00**

(86) International application number:
**PCT/JP2024/017666**

(87) International publication number:
**WO 2025/004562 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.06.2023 JP 2023107488**

(71) Applicant: **Nitto Denko Corporation**
**Osaka 567-8680 (JP)**

(72) Inventors:
- **SATO, Keisuke**
  **Ibaraki-shi, Osaka 567-8680 (JP)**
- **HATTORI, Daisuke**
  **Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **LAMINATE, OPTICAL MEMBER, AND OPTICAL DEVICE**

(57) Provided is a laminate having a low refractive index and high mechanical strength. A laminate (10) of the present disclosure includes a void-containing layer (11) and a pressure-sensitive adhesive/adhesive layer (12). The pressure-sensitive adhesive/adhesive layer (12) is directly laminated on one surface or both surfaces of the void-containing layer (11). A refractive index of the void-containing layer (11) measured in a state of the laminate (10) is 1.30 or less. Nanoindentation harness measured by pushing an indenter of a nano indenter into the pressure-sensitive adhesive/adhesive layer (12) for 2000 nm is 0.5 MPa or more. Peel strength of interlayer between the void-containing layer (11) and the pressure-sensitive adhesive/adhesive layer (12) measured by a tensile testing machine at a tensile speed of 0.3 m/min is 3 N/25 mm or more.

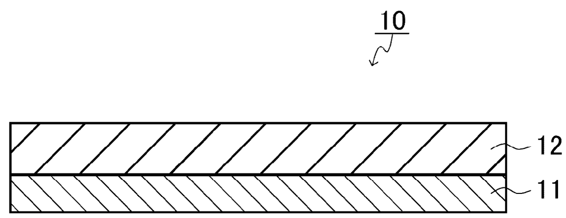


FIG. 1A

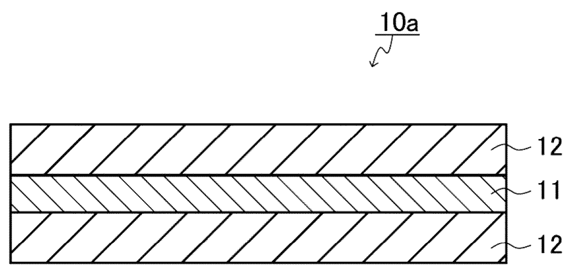


FIG. 1B

EP 4 729 294 A1

## Description

TECHNICAL FIELD

The present disclosure relates a laminate, an optical member, and an optical device.

BACKGROUND ART

In an optical device, the use of a low-refractive index layer, for example as a total reflection layer, is proposed. For example, Patent Literature 1 discloses a laminate with a layer interposed between a light guide plate and a reflection plate, the layer having a refractive index lower than that of the light guide plate. For the low refractive index layer, for example, a void-containing layer having voids is used in order to achieve a refractive index as close as possible to that of air.

Citation List

Patent Literature

Patent Literature 1: JPH10(1998)-062626 A

SUMMARY OF INVENTION

Technical Problem

An optical member including a void-containing layer is generally used in a laminated structure (laminate) bonded via a pressure-sensitive adhesive layer or an adhesive layer (hereinafter sometimes collectively referred to as "a pressure-sensitive adhesive/adhesive layer").

Here, in a laminate in which a void-containing layer and a pressure-sensitive adhesive/adhesive layer are directly laminated, when the pressure-sensitive adhesive/adhesive layer is soft, the interlayer peel strength in the laminate tends to be high. At the same time, the softness of the pressure-sensitive adhesive/adhesive layer also results in permeation of the pressure-sensitive adhesive/adhesive layer into voids of the void-containing layer, thus the void fraction of the void-containing layer decreases, and thus the refractive index of the void-containing layer in the laminate tends to increase. In contrast, when the pressure-sensitive adhesive/adhesive layer is hard, the pressure-sensitive adhesive/adhesive layer is less liable to permeate into voids of the void-containing layer. In this case, the refractive index of the void-containing layer in the laminate can be maintained at a low level, but the interlayer peel strength (mechanical strength) in the laminate tends to be low. Accordingly, in a laminate including a void-containing layer and a pressure-sensitive adhesive/adhesive layer, the refractive index of the void-containing layer in the laminate, and the interlayer peel strength in the laminate are in a trade-off relationship. Therefore, realization of a laminate that can achieve a high mechanical strength even at a low refractive index is desired.

Hence, it is an object of the present disclosure to provide a laminate having a low refractive index and excellent mechanical strength, an optical member including the laminate, and an optical device including the optical member.

Solution to Problem

To achieve the above object, the present disclosure provides a laminate including a void-containing layer, and a pressure-sensitive adhesive/adhesive layer. The pressure-sensitive adhesive/adhesive layer is directly laminated on one surface or both surfaces of the void-containing layer. A refractive index of the void-containing layer measured in a state of the laminate is 1.30 or less. Nanoindentation hardness measured by pushing an indenter of a nano indenter into the pressure-sensitive adhesive/adhesive layer for 2000 nm is 0.5 MPa or more. Peel strength of interlayer between the void-containing layer and the pressure-sensitive adhesive/adhesive layer measured by a tensile testing machine at a tensile speed of 0.3 m/min is 3 N/25 mm or more.

The present disclosure also provides an optical member including the laminate of the present disclosure.

The present disclosure also provides an optical device including the optical member of the present disclosure.

Advantageous Effects of Invention

The present disclosure can provide a laminate having a low refractive index and excellent mechanical strength, an optical member including the laminate, and an optical device including the optical member.

BRIEF DESCRIPTION OF DRAWINGS

[FIGS. 1A and 1B] FIGS. 1A and 1B are cross-sectional views showing an example of the configuration of a laminate of the present disclosure.

[FIGS. 2A and 2B] FIGS. 2A and 2B are cross-sectional views showing another example of the configuration of the laminate of the present disclosure.

[FIGS. 3A and 3B] FIGS. 3A and 3B are cross-sectional views showing still another example of the configuration of the laminate of the present disclosure.

[FIG. 4] FIG. 4 is a graph showing a relationship between peel strength and a refractive index.

DESCRIPTION OF EMBODIMENTS

The present disclosure will be described more specifically below with reference to illustrative examples. It is to be noted, however, that the present disclosure is by no means limited by the following descriptions.

In the present disclosure, a "pressure-sensitive adhesive/adhesive layer" is a layer formed of at least either of a pressure-sensitive adhesive or an adhesive. In the present disclosure, unless otherwise specified, the "pressure-sensitive adhesive/adhesive layer" may be a "pressure-sensitive adhesive layer" formed of a pressure-sensitive adhesive, an "adhesive layer" formed of an adhesive, or a layer including both a pressure-sensitive adhesive and an adhesive. Further, in the present disclosure, the pressure-sensitive adhesive and the adhesive are collectively referred to as the "pressure-sensitive adhesive/adhesive" in some cases. Generally, an agent having a relatively weak pressure-sensitive adhesive force or an adhesive force (e.g., an agent that adheres a substance in a peelable manner) is called the "pressure-sensitive adhesive", and an agent having a relatively strong pressure-sensitive adhesive force or an adhesive force (e.g., an agent that adheres a substance in a non-peelable or hardly peelable manner) is called the "adhesive", and the two of them are distinguished in some cases. In the present disclosure, there is no clear distinction between the "pressure-sensitive adhesive" and the "adhesive". Also, in the present disclosure, there is no clear distinction between the "pressure-sensitive adhesive force" and the "adhesive force".

In the present disclosure, "on" or "on a surface" may indicate a state of directly in contact with or in contact with the surface, or a state of in contact with or in contact with the surface with another layer or the like interposed therebetween.

In the present disclosure, "interlayer" refers to any portion that exists between one layer and another layer, including the one layer and the another layer. That is, for example, an interlayer between one layer and another layer may refer to any portion of the one layer, any portion of the another layer, or any portion of still another layer included between the one layer and the other layer, and may also be a boundary portion between any two of the one layer, the another layer, and the still another layer.

1. Laminate

As described above, the laminate of the present disclosure includes a void-containing layer and a pressure-sensitive adhesive/adhesive layer. The pressure-sensitive adhesive/adhesive layer is directly laminated on one surface or both surfaces of the void-containing layer. In the present disclosure, for example, "the pressure-sensitive adhesive/adhesive layer is 'directly laminated on' the void-containing layer" may refer to either "the pressure-sensitive adhesive/adhesive layer is in direct contact with the void-containing layer" or "the pressure-sensitive adhesive/adhesive layer is laminated on the void-containing layer with an intermediate layer interposed therebetween".

FIG. 1A is a cross-sectional view showing an example of a configuration of a laminate of the present disclosure. As shown in FIG. 1A, in a laminate 10, a pressure-sensitive adhesive/adhesive layer 12 is directly laminated on one surface of a void-containing layer 11. Here, the nanoindentation hardness measured by pushing an indenter of a nano indenter into the pressure-sensitive adhesive/adhesive layer 12 for 2000 nm (hereinafter, sometimes referred to as "nanoindentation hardness") is 0.5 MPa or more. The peel strength of the interlayer between the void-containing layer 11 and the pressure-sensitive adhesive/adhesive layer 12, which is measured by a tensile testing machine at a tensile speed of 0.3 m/min, is 3 N/25 mm or more. The refractive index of the void-containing layer 11, which is measured as the laminate 10, is 1.30 or less.

FIG. 1B shows a cross-sectional view of another example of the configuration of the laminate of the present disclosure. As shown in FIG. 1B, in a laminate 10a, the pressure-sensitive adhesive/adhesive layers 12 are directly laminated with the both surfaces of the void-containing layer 11.

Further, as described above, the laminate of the present disclosure may include an intermediate layer interposed between the void-containing layer and the pressure-sensitive adhesive/adhesive layer. The intermediate layer may be a layer formed by uniting the void-containing layer and the pressure-sensitive adhesive/adhesive layer. FIGS. 2A and 2B show examples of such a laminate of the present disclosure. In a laminate 10b of FIG. 2A, as can be seen, the pressure-sensitive adhesive/adhesive layer 12 is directly laminated on one surface of the void-containing layer 11. This laminate 10b is the same as the laminate 10 of FIG. 1A except that an intermediate layer 13 is interposed between the void-containing layer 11 and the pressure-sensitive adhesive/adhesive layer 12. The intermediate layer 13 is a layer formed by uniting the void-containing layer 11 and the pressure-sensitive adhesive/adhesive layer 12. In a laminate 10c of FIG. 2B, as can be seen, the pressure-sensitive adhesive/adhesive layers 12 are directly laminated on both surfaces of the void-containing layer 11. This laminate 10c is the same as the laminate 10a of FIG. 1B, except that the intermediate layer 13 is interposed between the void-containing layer 11 and each of the pressure-sensitive adhesive/adhesive layers 12. As in FIG. 2A, the intermediate layer 13 is a layer formed by uniting the void-containing layer 11 and the pressure-sensitive adhesive/adhesive layer 12.

The laminate of the present disclosure may or may not necessarily include a component(s) other than the void-containing layer, the pressure-sensitive adhesive/adhesive layer, and the intermediate layer. The other component(s) is not particularly limited, and may be, for example, a base or the like. The base is not particularly limited, and may be, for example, a film (e.g., a resin film), a glass plate, or the like, as described below. FIGS. 3A and 3B show examples of such a laminate of the present disclosure. A laminate 10d of FIG. 3A is, as can be seen, the same as the laminate 10b of FIG. 2A, except that bases 14 are respectively provided on the surface of the void-containing layer 11 opposite to the side facing the pressure-sensitive adhesive/adhesive layer 12, and on the surface of the pressure-sensitive adhesive/adhesive layer 12 opposite to the side facing the void-containing layer 11, so as to be in direct contact with each other. A laminate 10e of FIG. 3B is, as can be seen, the same as the laminate 10c of FIG. 3B, except that the bases 14 are respectively provided on the surfaces of the pressure-sensitive adhesive/adhesive layers 12 opposite to the sides facing the void-containing layer 11, so as to be in direct contact with each other. In FIGS. 3A and 3B, the bases 14 are respectively provided on both sides of the laminate. However, the present disclosure is not limited thereto, and for example, the base 14 may be provided only on one side of the laminate. Further, in FIGS. 3A and 3B, the bases 14 are provided so as to be in direct contact with the void-containing layer 11 or the pressure-sensitive adhesive/adhesive layer 12. However, the present disclosure is not limited thereto, and for example, the other component(s) may be interposed between the base 14 and the void-containing layer 11 or the pressure-sensitive adhesive/adhesive layer 12. The other component(s) is not particularly limited, and may be, for example, an optical functional layer. The optical functional layer is not particularly limited either, and may be, for example, an optical functional layer used in a general optical film, such as a microlens film, a prism film, a diffusion film, a polarized reflection film, a polarizing film, a retardation film, and a high refractive index layer.

The void-containing layer is, for example, a void-containing layer in which pulverized products of a gelled silicon compound are chemically bonded to each other. By using the pulverized products of the gelled silicon compound, the three-dimensional structure of the gelled silicon compound is destroyed, and a new three-dimensional structure different from that of the gelled silicon compound is formed. In this manner, the void-containing layer becomes a layer having a new pore structure (new void-containing structure) that cannot be obtained in a layer formed of the gelled silicon compound, and thus a nanoscale void-containing layer having a high void fraction can be formed. Furthermore, when the void-containing layer is, for example, a gelled silicon compound, the pulverized products are chemically bonded to each other while adjusting the number of siloxane bond functional groups of the gelled silicon compound. Herein, the "gelled silicon compound" refers to a polymer porous material including a siloxane bond and includes, for example, a porous material including silsesquioxane as a structural unit. After a new three-dimensional structure is formed as a precursor of the void-containing layer, chemical bonding (e.g., crosslinking) is performed in a process of bonding. Therefore, when the void-containing layer is, for example, a functional porous material, the void-containing layer can maintain sufficient strength and flexibility even it has a void-containing structure. Accordingly, the present disclosure allows application of the void-containing layer to various objects in easy and convenient manner.

In the void-containing layer, a form in which the pulverized products are chemically bonded to each other (form of chemical bonding) is not particularly limited. Specific examples of the chemical bond include a covalent bond, an ionic bond, and a metallic bond. For example, the pulverized products may be crosslinked with each other through covalent bonds (crosslinking bonds). The form of the chemical bond of the pulverized products (e.g., the aforementioned crosslinking bond) may be, for example, a form in which the pulverized products are directly bonded to each other, or a form in which the pulverized products are indirectly bonded to each other via another substance such as a crosslinking aid, a linker, a spacer, or the like. A method for chemically bonding the pulverized products to each other is as described in the method for producing the void-containing layer, which will be described later.

The crosslinking bond is, for example, a siloxane bond. Examples of the siloxane bond include a T2 bond, a T3 bond, and a T4 bond shown below. When the gelled silicon compound includes siloxane bonds, the gelled silicon compound may include any one type of the bonds, any two types of the bonds, or all three types of the bonds. Among the siloxane bonds, the higher the ratio of the T2 and T3 bonds, the greater the flexibility and the more the inherent properties of the gel can be expected, but the film strength becomes fragile. On the other hand, when the ratio of the T4 bond among the siloxane bonds is high, the film strength tends to be easily exhibited, but the void size becomes smaller and the flexibility deteriorates. Therefore, it is preferable to adjust the ratios of T2, T3, and T4, for example, depending on the intended application.

Chemical Formula 1

T2

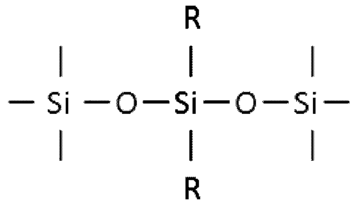

T3

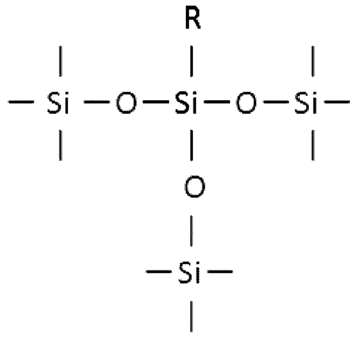

T4

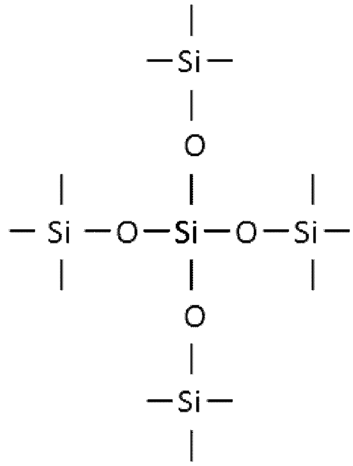

When the void-containing layer includes the siloxane bonds, the ratio of T2, T3, and T4, for example, when expressed relatively with T2 being "1", is T2:T3:T4 = 1:[1-100]:[0-50], 1:[1-80]:[1-40], or 1:[5-60]:[1-30].

In the void-containing layer, the gelled silicon compound is, for example, a compound obtained by condensation or partial condensation of a silane compound. The condensation includes, for example, dehydration condensation. The partially condensed state refers to a state in which, for example, a part of the functional groups among the condensable functional groups (e.g., alkoxy groups) in the silane compound is condensed, and the remaining functional groups remain as uncondensed condensable functional groups. In other words, for example, among the silane compounds, a part of the silane compounds is bonded through siloxane bonds, while the other silane compounds remain unbonded. The proportion of the unbonded silane compounds is, for example, less than 50%, 30% or less, or 15% or less.

The silane compound includes, for example, a monofunctional to trifunctional silane compound and a tetrafunctional silane compound. The silane compound includes, for example, at least one silane compound selected from monofunctional to trifunctional silane compounds, and further a tetrafunctional silane compound. Examples of the monofunctional to trifunctional silane compound include monofunctional to trifunctional alkoxysilanes. Examples of the tetrafunctional silane compound include tetrafunctional alkoxysilanes. Examples of the monofunctional silane compound include trimethylmethoxysilane (TMMS), trimethylethoxysilane (TMES), and trimethylpropoxysilane (TMPS). Examples of the bifunctional silane compound include dimethyldimethoxysilane (DDMS), dimethyldiethoxysilane (DDES), and dimethyldipropoxysilane (DDPS). E xamples of the trifunctional silane compound include methyltrimethoxysilane (MTMS), methyltriethoxysilane (MTES), methyltripropoxysilane (MTPS), 3-acryloxypropyltriethoxysilane, vinyltrimethoxysilane, vinyltriethoxysilane, 4-vinylbutyltrimethoxysilane, 4-vinylbutyltriethoxysilane, 8-vinyloctyltrimethoxysilane, 8-vinyloctyltriethoxysilane, 10-methacryloyloxydecyltrimethoxysilane, 10-acryloyloxydecyltrimethoxysilane, 10-methacryloyloxydecyltriethoxysilane, and 10-acryloyloxydecyltriethoxysilane. Examples of the tetrafunctional silane compound include tetramethoxysilane (TMOS), tetraethoxysilane (TEOS), and tetrapropoxysilane (TPOS).

The content ratio of the tetrafunctional silane compound relative to the amount of substance of the monofunctional to trifunctional silane compound is, for example, 1 to 25 mol%. The lower limit of the content ratio is, for example, 2 mol% or more, 3 mol% or more, or 3.5 mol% or more, and the upper limit thereof is, for example, 20 mol% or less, 15 mol% or less, or 10 mol% or less. The range of the content ratio is, for example, 2 to 20 mol%, 3 to 15 mol%, 3.5 to 15 mol%, or 3.5 to 10 mol%. The content ratio is preferably not too high, for example, from the viewpoint of ease of pulverization in a process of pulverizing gel. The content ratio is preferably not too low, for example, from the viewpoint of improving the strength of the low-refractive index layer.

The void-containing layer is, for example, a void-containing layer in which pulverized products of the gelled silicon compound are chemically bonded to each other under a coexistence condition with an additive. The additive may include, for example, at least either of a crosslinking reaction accelerator or a precursor thereof. The crosslinking reaction accelerator may be, for example, an acidic substance or a basic substance. The crosslinking reaction accelerator can also be described as, for example, a catalyst that promotes chemical bonds (crosslinking bonds) between the pulverized products of the gelled silicon compound. The precursor of the crosslinking reaction accelerator can also be described as, for example, a substance that generates the crosslinking reaction accelerator by light or heat (crosslinking accelerator generator).

As the chemical reaction for chemically bonding the gelled silicon compounds to each other, it is preferable to use a dehydration condensation reaction of residual silanol groups contained in silica sol molecules. Promotion of the reaction between hydroxyl groups of the silanol groups with a crosslinking reaction accelerator allows continuous film formation that achieves curing of the void-containing structure in a short time. Examples of the crosslinking reaction accelerator include photoactive catalysts and thermally active catalysts. The photoactive catalyst allows, for example, chemical bonds (e.g., crosslinking bonds) of the gelled silicon compounds without heating, in a process of bonding described later. As a result, for example, shrinkage of the pulverized products to be bonded is less likely to occur in the bonding, allowing a higher void fraction to be maintained. In addition to or instead of the photoactive catalyst, for example, a substance that generates a catalyst by light (photo-catalyst generator) may be used. In addition to or instead of the thermally active catalyst, for example, a substance that generates a catalyst by heat (thermo-catalyst generator) may be used. The photo-catalyst generator is not particularly limited, and examples thereof include photo-base generators (substances that generate a basic catalyst upon light irradiation) and photo-acid generators (substances that generate an acidic catalyst upon light irradiation). Among these, the photo-based generators are preferable. Examples of the photo-base generator include 9-anthrylmethyl N,N-diethylcarbamate (trade name: WPBG-018), (E)-1-[3-(2-hydroxyphenyl)-2-propenoyl]piperidine (trade name: WPBG-027), 1-(anthraquinon-2-yl)ethyl imidazolecarboxylate (trade name: WPBG-140), 2-nitrophenylmethyl 4-methacryloyloxy piperidine-1-carboxylate (trade name; WPBG-165), 1,2-diisopropyl-3-[bis(dimethylamino) methylene] guanidinium 2-(3-benzoylphenyl)propionate (trade name: WPBG-266), 1,2-dicyclohexyl-4,4,5,5-tetramethylbiguanidium n-butyltriphenylborate (trade name WPBG-300), 2-(9-oxoxanthen-2-yl)propionic acid 1,5,7-triazabicyclo [4.4.0]dec-5-ene salt (Tokyo Chemical Industry Co., Ltd.), and a compound containing 4-piperidinemethanol (trade name: HDPD-PB100, manufactured by Heraeus). Note that, the trade names with "WPBG" are all products of FUJIFILM Wako Pure Chemical Corporation. Examples of the photo-acid generator include aromatic sulfonium salts (trade name: SP-170, ADEKA CORPORATION), triarylsulfonium salts (trade name: CPI101A, San-Apro Ltd.), and aromatic iodonium salts (trade name: Irgacure 250, Ciba Japan K.K.). The crosslinking reaction accelerator for chemically bonding the pulverized products of the gelled silicon compound to each other is not limited to the photoactive catalyst or the photo-catalyst generator, and may be, for example, a thermally active catalyst or a thermal-catalyst generator such as urea. Examples of the crosslinking reaction accelerator for chemically bonding the pulverized products of the gelled silicon compound to each other include basic catalysts such as potassium hydroxide, sodium hydroxide, and ammonium hydroxide, and acidic catalysts such as hydrochloric acid, acetic acid, and oxalic acid. Among these, the basic catalysts are preferable. The crosslinking reaction accelerator and the precursor thereof may be used, for example, by adding at least one of the crosslinking reaction accelerator or the precursor thereof immediately before coating, to a sol dispersion (e.g., suspension) including the pulverized products (gelled silicon compound), or as a mixed solution obtained by mixing at least either of the crosslinking reaction accelerator or the precursor thereof with a solvent. The mixed solution may be a coating solution obtained by directly adding and dissolving at least one of the crosslinking reaction accelerator or the precursor thereof in the sol dispersion, a solution in which at least one of the crosslinking reaction accelerator or the precursor thereof is dissolved in a solvent, or a dispersion in which at least one of the crosslinking reaction accelerator or the precursor thereof is dispersed in a solvent. The solvent is not particularly limited, and examples thereof include water and a buffer solution. The addition amount of the crosslinking reaction accelerator and the precursor thereof is not particularly limited and is, for example, 0.01 to 20 wt%, 0.05 to 10 wt%, or 0.1 to 5 wt% relative to the weight of the gelled silicon compound.

The lower limit of the total content ratio of the crosslinking reaction accelerator and the precursor thereof relative to the total amount of substance of the substance of the monofunctional to trifunctional silane compound and the tetrafunctional silane compound is , for example, 1 mol% or more, 1.5 mol% or more, 2 mol% or more, or 2.5 mol% or more, and the upper limit thereof is, for example, 5 mol% or less, 4 mol% or less, 3.5 mol% or less, or 3 mol% or less.

When the void-containing layer does not include the tetrafunctional silane compound as the silane compound, the lower limit of the total content ratio of the crosslinking reaction accelerator and the precursor thereof relative to the total amount of substance of the silane compound is, for example, 1.5 mol% or more, 2 mol% or more, or 2.5 mol% or more, and the upper limit thereof is, for example, 5 mol% or less, 4 mol% or less, 3.5 mol% or less, or 3 mol% or less.

As the additive, for example, a crosslinking aid may further be included. The crosslinking aid can also be described as a medium for indirectly bonding the pulverized products of the gelled silicon compound to each other through chemical bonds between the pulverized products of the gelled silicon compound and the crosslinking aid. The crosslinking aid enters between the pulverized products, each of the pulverized products and the crosslinking aid interact or bond to each other, and thus even the pulverized products that are somewhat distant from each other can be bonded to each other, thereby efficiently increasing the strength.

As the crosslinking aid, a polycrosslinkable silane monomer is preferred. The polycrosslinkable silane monomer specifically includes, for example, two or more and three or less alkoxysilyl groups, and the chain length between the alkoxysilyl groups may have from 1 or more and 10 or less carbon atoms and may also include an element(s) other than carbon. Examples of the crosslinking aid include bis(trimethoxysilyl)ethane, bis(triethoxysilyl)ethane, bis(trimethoxysilyl) methane, bis(triethoxysilyl)methane, bis(triethoxysilyl)propane, bis(trimethoxysilyl)propane, bis(triethoxysilyl)butane, bis(trimethoxysilyl)butane, bis(triethoxysilyl)pentane, bis(trimethoxysilyl)pentane, bis(triethoxysilyl)hexane, bis(trimethoxysilyl)hexane, bis(trimethoxysilyl)-N-butyl-N-propyl-ethane-1,2-diamine, tris-(3-trimethoxysilylpropyl)isocyanurate, and tris-(3-triethoxysilylpropyl)isocyanurate. The addition amount of the crosslinking aid is not particularly limited and is, for example, 0.01 to 20 wt%, 0.05 to 15 wt%, or 0.1 to 10 wt%, relative to the weight of the gelled silicon compound.

The lower limit of the total content ratio of the crosslinking aid relative to the total amount of substance of the monofunctional to trifunctional silane compound and the tetrafunctional silane compound is, for example, 1 mol% or more, 2 mol% or more, 2.5 mol% or more, or 3 mol% or more, and the upper limit thereof is, for example, 6 mol% or less, 5.5 mol% or less, 5 mol% or less, 4.5 mol% or less, or 3.5 mol% or less.

When the void-containing layer does not include the tetrafunctional silane compound as the silane compound, the lower limit of the total content ratio of the crosslinking aid relative to the total amount of substance of the silane compound is, for example, 2 mol% or more, or 2.5 mol% or more, and the upper limit thereof is, for example, 6 mol% or less, 5 mol% or less, 4 mol% or less, 3.5 mol% or less, or 3 mol% or less.

The void-containing layer has, for example, a pore structure. In the void-containing layer, the void size of the pore refers to the diameter of the major axis, among the diameters of the major axis and the minor axis of the void (pore). The pore size is, for example, 5 nm to 200 nm. The void size is, for example, 5 nm or more, 10 nm or more, or 20 nm or more, the upper limit thereof is, for example, 200 nm or less, 150 nm or less, 100 nm or less, 50 nm or less, 40 nm or less, or 30 nm or less, the range thereof is, for example, 5 nm to 200 nm or 10 nm to 100 nm. Since the preferred void size depends on the intended application of the void-containing structure, the void size is to be adjusted to a desired value depending on the purpose. The void size can be evaluated, for example, by the following method.

Cross-sectional SEM observation of void-containing layer

In the present disclosure, the form of the void-containing layer can be observed and analyzed using SEM (Scanning Electron Microscopy). Specifically, for example, the void-containing layer is subjected to FIB processing under cooling conditions (acceleration voltage: 30 kV), and a cross-sectional electron image of the obtained cross-sectional sample can be obtained at a magnification of 100,000× by FIB-SEM (trade name: Helios NanoLab 600, manufactured by FEI, acceleration voltage: 1 kV).

Evaluation of void size

In the present disclosure, the void size can be quantified by the BET test method. Specifically, 0.1 g of a sample (the void-containing layer) is placed into the capillary of a pore distribution/specific surface area measuring device (trade name: BELSORP MINI, manufactured by MicrotracBEL Corp.), and vacuum drying is performed at room temperature for 24 hours to degas the gas within the void-containing structure. Thereafter, nitrogen gas is adsorbed onto the sample to obtain a BET plot, a BJH plot, and an adsorption isotherm, thereby determining the pore distribution. Through this method, the void size can be evaluated.

The void-containing layer may, for example, have a pore structure (porous structure) as described above and may be, for example, an open-cell structure with the continuing pore structure. The open-cell body refers to, for example, a state where the pore structure of the void-containing layer is connected three-dimensionally, meaning that the internal voids of the pore structure are continuous. When a porous material has an open-cell structure, the void fraction occupying the bulk can thus be increased. However, when closed-cell particles such as hollow silica are used, an open-cell structure cannot be formed. In contrast, since the void-containing layer includes sol particles (pulverized products of porous gel forming sol) having a three-dimensional dendritic structure, the dendritic particles settle and deposit in a coating film (a coating film of the sol including the pulverized products of the porous gel), and thus an open-cell structure can be easily formed. The void-containing layer is more preferred to have a monolithic structure in which the open-cell structure has multiple pore distributions. The monolithic structure refers to, for example, a hierarchical structure including a structure having nanosized fine voids and an open-cell structure in which the same nanosized voids are aggregated. With the monolithic structure, for example, it is possible to impart film strength with fine voids while imparting a high void fraction with coarse open-cell voids, thereby achieving both film strength and a high void fraction. In order to form such a monolithic structure, it is important, for example, first to control the pore distribution of the void structure generated in the porous gel before being pulverized into the pulverized products. In addition, by controlling the particle size distribution of the pulverized products to a desired size when pulverizing the porous gel, the monolithic structure can be formed.

In the void-containing layer, the haze indicating the transparency is not particularly limited, and the lower limit thereof is, for example, 0.1% or more, 0.2% or more, or 0.3% or more, the upper limit thereof is, for example, 10% or less, 5% or less, or 3% or less, and the range thereof is, for example, 0.1 to 10%, 0.2 to 5%, or 0.3 to 3%.

The haze can be measured, for example, by the following method.

Evaluation of haze

A void-containing layer (the void-containing layer) is cut into a size of 50 mm × 50 mm, and set in a haze meter (HM-150, manufactured by MURAKAMI COLOR RESEARCH LABORATORY) to measure the haze. The haze value is calculated by the following equation.

$$\text{Haze (\%)} = [\text{Diffuse transmittance (\%)} / \text{Total light transmittance (\%)}] \times 100\ (\%)$$

With regard to the refractive index, generally, a refractive index of a medium is defined as the ratio of the conduction velocity of a light wavefront in vacuum to the propagation velocity in the medium. Note that, in the present disclosure, unless otherwise specified, the refractive index refers to a refractive index measured at a wavelength of 550 nm. The method for measuring the refractive index is not particularly limited and can be performed, for example, by the following method.

In the case where only the void-containing layer is measured, the refractive index of the void-containing layer is, for example, 1.30 or less. The upper limit of the refractive index of the void-containing layer in the case where only the void-containing layer is measured is, for example, 1.30 or less, less than 1.30, 1.26 or less, 1.25 or less, less than 1.25, 1.24 or less, 1.23 or less, or 1.22 or less, the lower limit thereof is, for example, 1.05 or more, 1.10 or more, 1.15 or more, 1.16 or more, 1.17 or more, 1.18 or more, or 1.19 or more, and the range thereof is, for example, 1.05 or more and 1.30 or less, 1.05 or more and less than 1.30, 1.10 or more and 1.25 or less, 1.15 or more and less than 1.25, or 1.19 or more and less than 1.25. The method for measuring the refractive index of the void-containing layer in the case where only the void-containing layer is measured is not particularly limited and can be performed, for example, by the following method.

The lower limit of the void fraction of the void-containing layer is, for example, 30 vol% or more, or 50 vol% or more, and the upper limit thereof is, for example, 90 vol% or less, 75 vol% or less, or 60 vol% or less, and the range thereof is, for example, 30 to 90 vol%, 50 to 75 vol%, or 50 to 60 vol%.

Evaluation of refractive index of void-containing layer in the case where only void-containing layer is measured

After forming a void-containing layer (the void-containing layer in the laminate of the present disclosure) on an acrylic film, the film is cut into a size of 50 mm × 50 mm and laminated on the surface of a glass plate (thickness: 3 mm) via a pressure-sensitive adhesive layer. The central portion (approximately 20 mm in diameter) of the back surface of the glass plate is coated with black ink to prepare a sample that does not reflect on the back surface of the glass plate. The sample is set in an ellipsometer (VASE, manufactured by J.A. Woollam Japan), and the refractive index is measured under conditions of a wavelength of 550 nm and an incident angle of 50 to 80 degrees, and the average value is taken as the refractive index.

After a heat and humidity durability test in which the sample is held at a temperature of 85°C and a humidity of 85% RH for 500 hours, the lower limit of the void-remaining rate of the void-containing layer is, for example, 10 vol% or more, 20 vol% or more, 30 vol% or more, 40 vol% or more, 50 vol% or more, 60 vol% or more, 70 vol% or more, 80 vol% or more, 85 vol% or more, or more than 85 vol%. The method for measuring the refractive index of the void-containing layer when only the void-containing layer is measured is not particularly limited and can be performed, for example, by the following method.

Evaluation of void-remaining rate of void-containing layer

The prepared laminate is placed in an oven at a temperature of 85°C and a humidity of 85% RH, and subjected to a heat and humidity durability test for 500 hours. After the heat and humidity durability test, the degree of filling of the void portions in the void-containing layer is checked by SEM, and the remaining rate of the void fraction can be calculated.

The thickness of the void-containing layer is not particularly limited, and the lower limit thereof is, for example, 0.05 μm, or more or 0.1 μm or more, the upper limit thereof is, for example, 1000 μm or less, 100 μm or less, 10 μm or less, 5 μm or less, or 2 μm or less, and the range thereof is, for example, 0.05 to 1000 μm, or 0.1 to 100 μm.

The form of the void-containing layer is not particularly limited and may be, for example, in the form of a film or a block.

The method for producing the void-containing layer is not particularly limited and may be, for example, the method for producing the void-containing layer described later, or the method described in WO 2019/065999 or WO 2019/065803. The disclosures of these publications are incorporated herein by reference.

In the present disclosure, the pressure-sensitive adhesive/adhesive layer is not particularly limited. In the present disclosure, the pressure-sensitive adhesive or adhesive for forming the pressure-sensitive adhesive/adhesive layer is not particularly limited either and may be, for example, a general pressure-sensitive adhesive or adhesive. Examples of the pressure-sensitive adhesive or adhesive include polymer adhesives such as acrylic-based, vinyl alcohol-based, silicone-based, polyester-based, polyurethane-based, and polyether-based adhesives, and rubber-based adhesives. Examples

thereof also include adhesives formed of water-soluble crosslinking agents or the like of vinyl alcohol-based polymers such as glutaraldehyde, melamine, and oxalic acid. One type of these pressure-sensitive adhesives and adhesives may be used alone, or two or more types thereof may be used in combination (e.g., by mixing or laminating). The thickness of the pressure-sensitive adhesive/adhesive layer is not particularly limited and is, for example, 0.1 to 100 μm, 5 to 50 μm, 10 to 30 μm, or 12 to 25 μm.

In the pressure-sensitive adhesive/adhesive layer of the laminate of the present disclosure, the nanoindentation hardness is, as described above, 0.5 MPa or more. The lower limit of the nanoindentation hardness may be, for example, 0.55 MPa or more, 0.6 MPa or more, or 0.65 MPa or more, and the upper limit thereof may be, for example, 2.0 MPa or less, 1.5 MPa or less, 1.3 MPa or less, or 1.1 MPa or less. The method for measuring the nanoindentation hardness is not particularly limited and can be performed, for example, by the following method.

Evaluation of nanoindentation hardness

A measurement sample is cut into a square of approximately 1 cm and fixed to a predetermined support, and the nanoindentation hardness of the pressure-sensitive adhesive/adhesive layer in the laminate of the present disclosure is measured under the following conditions. The nanoindentation hardness can be measured by the nanoindentation method.

- Analytical instrument: TriboIndenter, manufactured by Hysitron Inc.
- Indenter used: Conical (spherical: diameter of 20 μm)
- Measurement method: Single indentation measurement
- Measurement temperature: Room temperature
- Indentation depth: 2000 nm

The nanoindentation hardness is calculated from the maximum load (Pmax) and the contact projected area (A) obtained from the measurement according to the following equation.

$$\text{Nanoindentation hardness} = \text{Pmax} / \text{A}$$

Note that, the nanoindentation hardness may be the nanoindentation hardness of either the surface or the cross section of the pressure-sensitive adhesive layer.

In the laminate of the present disclosure, the peel strength of the interlayer between the void-containing layer and the pressure-sensitive adhesive/adhesive layer, measured at a tensile speed of 0.3 m/min using a tensile testing machine is, as described above, 3 N/25 mm or more. The lower limit of the peel strength may be, for example, 3.5 N/25 mm or more, 4.0 N/25 mm or more, or 5.0 N/25 mm or more. Since the mechanical strength between the layers of the laminate of the present disclosure increases as the peel strength increases, the upper limit of the peel strength is not particularly limited, and may be, for example, 20 N/25 mm or less, 15 N/25 mm or less, or 10 N/25 mm or less. The peel strength is, for example, a peel strength measured as a result of cohesive failure of the void-containing layer. The method for measuring the peel strength is not particularly limited and can be performed, for example, by the following method.

Evaluation of peel strength of interlayer

A sample in which a void-containing layer (the void-containing layer in the laminate of the present disclosure) and a pressure-sensitive adhesive/adhesive layer (the pressure-sensitive adhesive/adhesive layer in the laminate of the present disclosure) are formed on a resin film base is prepared. An acrylic pressure-sensitive adhesive layer (thickness: 20 μm) is laminated on one side of the resin film base opposite to the side facing the void-containing layer. The laminated sample is cut into a size of 50 mm × 25 mm to produce a piece of adhesive tape. Then, the pressure-sensitive adhesive/adhesive layer (thickness: 10 μm) on the void-containing layer side is laminated onto a PET film (T100, manufactured by Mitsubishi Polyester Film, Inc.) cut into a strip shape of 25 mm × 100 mm, and the acrylic pressure-sensitive adhesive layer on the resin film base side is laminated and fixed to glass. The prepared sample is then chucked in a tensile testing machine (trade name: Autograph® (registered trademark) AG-Xplus, manufactured by Shimadzu Corporation) with a chuck distance of 100 mm, and a 180° peel test is performed at a tensile speed of 0.3 m/min. The 50 mm peel test is conducted N = 3 times, and the average test force is defined as the peel strength of the interlayer.

The refractive index of the void-containing layer measured in the state of the laminate is, as described above, 1.30 or less. The upper limit of the refractive index of the void-containing layer measured in the state of the laminate is, for example, 1.30 or less, less than 1.30, 1.26 or less, 1.25 or less, less than 1.25, 1.24 or less, 1.23 or less, or 1.22 or less, the lower limit thereof is, for example, 1.05 or more, 1.10 or more, 1.15 or more, 1.16 or more, 1.17 or more, 1.18 or more, or

1.19 or more, the range thereof is, for example, 1.05 or more and 1.30 or less, 1.05 or more and less than 1.30, 1.10 or more and 1.25 or less, 1.15 or more and less than 1.25, or 1.19 or more and less than 1.25. The method for measuring the refractive index of the void-containing layer measured in the state of the laminate is not particularly limited and can be performed, for example, by the following method.

Evaluation of void-containing layer measured in the state of laminate

A prism of a prism coupler (manufactured by Metricon Corporation) is brought into close contact with the base surface side of a laminate in which a pressure-sensitive adhesive/adhesive layer is provided on a void-containing layer (glass/pressure-sensitive adhesive/adhesive layer/void-containing layer/acrylic base), and the critical angle for total reflection is measured using a laser. The refractive index can be calculated from the measured value of the critical angle.

The laminate of the present disclosure may satisfy, for example, the following condition (1) where the refractive index is represented by X and the peel strength is represented by Y. FIG. 4 shows a graph illustrating the relationship between the peel strength and the refractive index under condition (1). In FIG. 4, the horizontal axis represents the refractive index, and the vertical axis represents the peel strength (N/25 mm).

$$\text{Condition (1): } Y \geq 80X - 93.8$$

The laminate of the present disclosure may also satisfy the following condition (2) where the refractive index is represented by X and the peel strength is represented by Y. FIG. 4 shows a graph illustrating the relationship between peel strength and refractive index under condition (2).

$$\text{Condition (2): } Y \geq 100X - 117$$

When condition (1) or condition (2) is satisfied, it is possible to obtain, for example, a laminate having a low refractive index and a high peel strength (that is, excellent mechanical strength). In order to satisfy condition (1) and condition (2), the type, the content ratio, and the like of the tetrafunctional silane compound or the additive may be appropriately adjusted, but not particularly limited thereto.

In the present disclosure, the intermediate layer is not particularly limited and is , for example, a layer formed by uniting a part of the void-containing layer and a part of the pressure-sensitive adhesive/adhesive layer, as described above. The thickness of the intermediate layer is not particularly limited and is, for example, 1 to 1500 nm, 5 to 1000 nm, 10 to 800 nm, or 20 to 500 nm.

The form of the laminate of the present disclosure is not particularly limited, and is typically in the form of a film.

The laminate of the present disclosure is, for example, a rolled form. The laminate of the present disclosure may further include, for example, a resin film, and the void-containing layer may be formed on the resin film with a long length, as described above. In this case, another long film may be laminated on the laminate of the present disclosure. After laminating another long-length resin film (e.g., interleaving paper, release film, and surface protection film) on the laminate of the present disclosure including the resin film and the void-containing layer, the laminate may be rolled to form a rolled form.

A method for producing the laminate of the present disclosure is not particularly limited and can be carried out, for example, by the production method of the present disclosure described below. Note that, unless otherwise specified, the method for producing the optical laminate of the present disclosure including no resin film can be performed in the same manner as the method for producing the laminate of the present disclosure, except that no resin film is used.

2. Method for producing laminate

A method for producing the laminate of the present disclosure is not particularly limited and can be carried out, for example, by the production method described below. However, the following description is illustrative and does not limit the present disclosure in any way.

As described above, the method for producing the laminate of the present disclosure includes forming the void-containing layer, and forming the pressure-sensitive adhesive/adhesive layer on the void-containing layer. The method for producing the laminate of the present disclosure may further include forming the intermediate layer by reacting the void-containing layer with the pressure-sensitive adhesive/adhesive layer.

The forming the void-containing layer (method for producing the void-containing layer) may further include synthesizing gelled silica, pulverizing gel, and bonding. The forming the void-containing layer (method for producing the void-containing layer of the present disclosure) may include or may not necessarily include a process other than the synthesizing gelled silica, the pulverizing gel, and the bonding. The process other than those processes is not particularly

limited, and examples thereof include coating, and drying, which will be described later.

The synthesizing gelled silica includes, for example, a process of synthesizing a gelled silicon compound by condensing or partially condensing the silane compound. The synthesizing gelled silica may further include, for example, a process of forming a gel by gelling a bulk porous material in a solvent. In this case, for example, the first pulverizing stage among a plurality of pulverizing stages described later (e.g., the first pulverizing stage described later) uses the gel obtained by gelation in the synthesizing gelled silica.

The method for producing the void-containing layer includes, for example, aging the gelled gel in a solvent. In this case, for example, the first pulverizing stage among the plurality of pulverizing stages (e.g., the first pulverizing stage) uses the gel after the aging.

The pulverizing the gel includes, for example, a process of pulverizing the gelled silicon compound to obtain pulverized products. The pulverizing the gel may be performed in a single stage, but is preferably performed in multiple pulverizing stages. The number of the pulverizing stages is not particularly limited and may be, for example, two or three or more.

The volume-average particle diameter of the gel after the first pulverizing stage may be, for example, 0.5 to 100 μm, 1 to 100 μm, 1 to 50 μm, 2 to 20 μm, or 3 to 10 μm. The volume-average particle diameter of the gel after the second pulverizing stage may be, for example, 10 to 1000 nm, 100 to 500 nm, or 200 to 300 nm. The volume-average particle diameter indicates the particle size variation of the pulverized products in the solution including the gel (gel-containing solution). The volume-average particle diameter can be measured, for example, by a particle size distribution analyzer such as a dynamic light scattering method, and a laser diffraction method, or by an electron microscope such as a scanning electron microscope (SEM), and a transmission electron microscope (TEM).

The method for producing the void-containing layer includes, for example, replacing the solvent with another solvent, after the synthesizing the gelled silica. In this case, for example, the first pulverizing stage among the plurality of pulverizing stages (e.g., the first pulverizing stage) uses the gel in the another solvent.

In at least one of the plurality of pulverizing stages in the method for producing the void-containing layer (e.g., at least either of the first pulverizing stage or the second pulverizing stage), for example, the pulverization of the porous material is controlled, while measuring the shear viscosity of the solution.

At least one of the plurality of pulverizing stages in the method for producing the void-containing layer (e.g., at least either of the first pulverizing stage or the second pulverizing stage) is performed, for example, by high-pressure media-less pulverization.

Hereinafter, in the method for producing the void-containing layer, the solution including the pulverized gel obtained through the process including the pulverizing the gel may simply be referred to as a "pulverized-gel containing solution".

Using the pulverized-gel containing solution, for example, a coating film thereof is formed, and the pulverized products in the coating film are chemically bonded through the process of bonding, thereby forming the void-containing layer as a functional porous material. The pulverized-gel containing solution allows the void-containing layer to be applied to various objects. Therefore, the pulverized-gel containing solution and the method for producing the same are useful, for example, in the production of the void-containing layer.

Since the pulverized-gel containing solution has, for example, extremely excellent uniformity, when the void-containing layer is applied, for example, to an optical member or the like, a good appearance can be achieved.

The pulverized-gel containing solution may be, for example, a pulverized-gel containing solution for obtaining a layer having a high void fraction (void-containing layer) through coating a base with the pulverized-gel containing solution (coating), and further drying the pulverized-gel containing solution (drying).

In the coating, the coating method for the pulverized-gel containing solution is not particularly limited, and general coating methods can be employed. Examples of the coating method include a slot-die method, a reverse gravure coating method, a micro gravure method (micro gravure coating method), a dip method (dip coating method), a spin coating method, a brush coating method, a roll coating method, a flexographic printing method, a wire bar coating method, a spray coating method, an extrusion coating method, a curtain coating method, and a reverse coating method. Among these, from the viewpoints of productivity and smoothness of the coating film, the extrusion coating method, the curtain coating method, the roll coating method, and the micro gravure coating method are preferable. The coating amount of the pulverized-gel containing solution is not particularly limited, and for example, can be appropriately set so that the thickness of the void-containing layer becomes suitable. The thickness of the void-containing layer is not particularly limited and is, for example, as described above.

In the drying, the pulverized-gel containing solution is dried (i.e., the dispersion medium contained in the pulverized-gel containing solution is removed) to form the dried coating film (precursor of the void-containing layer). The drying temperature in the drying is, for example, 50 to 250°C, 60 to 150°C, or 70 to 130°C. The drying time is, for example, 0.1 to 30 minutes, 0.2 to 10 minutes, or 0.3 to 3 minutes. The drying temperature is preferably low, and the drying time is preferably short, from the viewpoints of continuous productivity and achieving a high porosity. If the conditions are too severe, for example, when the base is a resin film, the base may stretch in the drying furnace as the temperature

approaches the glass transition temperature of the base, and defects such as cracks may occur in the formed void structure immediately after the coating. On the other hand, if the conditions are too mild, for example, in roll-to-roll processing, residual solvent may remain when the material exits the drying furnace, and when the material rubs against a roll in the next process, appearance defects such as scratches may occur.

The drying method may be, for example, natural drying, heat-drying, or vacuum drying. The drying method is not particularly limited, and for example, general heating instruments can be used. Examples of the heating instrument include a hot-air heater, a heating roll, and a far-infrared heater. Among these, when industrial continuous production is intended, heated drying is preferable.

The bonding includes a process of chemically bonding the pulverized products. The bonding can be performed, for example, by irradiating light or applying heat to the coating film including a catalyst or a catalyst generator that has been previously added to the pulverized-gel containing solution, or by spraying the catalyst onto the coating film and then irradiating light or applying heat thereto, or by irradiating light or applying heat while spraying the catalyst or the catalyst generator to the coating film. The catalyst may be, for example, the crosslinking reaction accelerator, or a strength improver for enhancing the strength of the void-containing layer. Alternatively, the crosslinking reaction accelerator may serve as the strength improver.

In the light irradiation, the accumulated light amount is not particularly limited and is, in terms of 360 nm wavelength, for example, 200 to 800 mJ/cm$^2$, 250 to 600 mJ/cm$^2$, or 300 to 400 mJ/cm$^2$. From the viewpoint of preventing insufficient effect due to inadequate light irradiation and insufficient decomposition by light absorption of the catalyst generator, an accumulated light amount of 200 mJ/cm$^2$ or more is preferable. From the viewpoint of preventing damage to the base under the void-containing layer and the occurrence of thermal wrinkles, an accumulated light amount of 800 mJ/cm$^2$ or less is preferable.

The heating temperature and heating time in the heating are not particularly limited, and the conditions of the heating treatment are not particularly limited either. The heating temperature is, for example, 50 to 250°C, 60 to 150°C, or 70to 130°C. The heating time is, for example, 0.1 to 30 minutes, 0.2 to 10 minutes, or 0.3 to 3 minutes. Alternatively, the process of drying the coated pulverized-gel containing solution as described above may also serve as the process for carrying out the chemical reaction in the presence of the catalyst. That is, during the drying of the coated pulverized-gel containing solution (e.g., suspension), the pulverized products may be chemically bonded to each other through a chemical reaction in the presence of the catalyst. In this case, the coating film may be further heated after the drying, to bond the pulverized products (microporous particles) more firmly to each other. Furthermore, it is presumed that the chemical reaction in the presence of the catalyst may also occur during the process of preparing the solution including microporous particles (e.g., suspension) and during the process of coating of the solution including microporous particles. However, this presumption does not limit the present disclosure in any way.

The forming the pressure-sensitive adhesive/adhesive layer may include, for example, a process of applying the pressure-sensitive adhesive/adhesive coating solution to a base, and a process of heating and drying the base on which the pressure-sensitive adhesive/adhesive coating solution has been applied. For example, the pressure-sensitive adhesive/adhesive layer may be formed on the void-containing layer by attaching an adhesive tape or the like, in which the pressure-sensitive adhesive/adhesive layer is laminated on a base, onto the void-containing layer, so that the pressure-sensitive adhesive/adhesive side faces the void-containing layer. In this case, the base of the adhesive tape or the like may be left as it is, or may be peeled off from the pressure-sensitive adhesive/adhesive layer. In particular, by peeling off the base to form a laminate without a base (base-less laminate), the thickness can be significantly reduced, thereby suppressing an increase in the thickness of a device or the like. In the present disclosure, the pressure-sensitive adhesive/adhesive layer can be produced, for example, using the pressure-sensitive adhesive/adhesive coating solution, as described above.

The forming the pressure-sensitive adhesive/adhesive layer can be carried out, for example, as follows. First, the pressure-sensitive adhesive/adhesive coating solution is prepared though a process of mixing all components of the pressure-sensitive adhesive/adhesive coating solution. The pressure-sensitive adhesive/adhesive coating solution may include, for example, a (meth)acrylic polymer, and may further include, or may not necessarily include, for example, a crosslinking agent (e.g., an isocyanate-based or epoxy-based crosslinking agent). The pressure-sensitive adhesive/adhesive coating solution may include, for example, the (meth)acrylic polymer, a monomer having one or two reactive double bonds per molecule, a crosslinking agent, and an organic peroxide. When the pressure-sensitive adhesive/adhesive coating solution includes other component(s), the other components(s) may also be mixed together at this time. For example, a polymerization solvent used in the production of the (meth)acrylic polymer may be left unremoved and mixed as a component of the pressure-sensitive adhesive/adhesive coating solution. The method for producing the pressure-sensitive adhesive/adhesive coating solution may or may not necessarily include a process other than the mixing, and may be simply mixing all components through the mixing.

Then, the pressure-sensitive adhesive/adhesive coating solution is applied onto a base (applying pressure-sensitive adhesive/adhesive coating solution). The base is not particularly limited and may be, for example, a film or the like. As the base, for example, a base made of a thermoplastic resin, a base made of glass, an inorganic base plate typified

by silicon, a plastic formed of a thermosetting resin, an element such as a semiconductor, a carbon fiber-based material typified by carbon nanotube, or the like may be preferably used, but not limited thereto. Examples of the form of the base include a film and a plate. Examples of thermoplastic resin include polyethylene terephthalate (PET), acrylic resins, cellulose acetate propionate (CAP), cycloolefin polymer (COP), triacetylcellulose (TAC), polyethylene naphthalate (PEN), polyethylene (PE), and polypropylene (PP). In the applying the pressure-sensitive adhesive/adhesive coating solution, the thickness of the applied pressure-sensitive adhesive/adhesive coating solution is not particularly limited, and may be appropriately adjusted so that the thickness of the pressure-sensitive adhesive/adhesive layer after drying be the predetermined thickness. The thickness of the pressure-sensitive adhesive/adhesive layer after drying is not particularly limited either and is, for example, described below.

Next, the base applied with the pressure-sensitive adhesive/adhesive coating solution is heated to be dried (heat-drying). In the heat-drying, the temperature is not particularly limited, and may be, for example, 50°C or more, 80°C or more, 100°C or more, or 155°C or more, and may be, for example, 200°C or less, 180°C or less, or 160°C or less. The time of heat-drying may be, for example, 0.5 minutes or more, 1 minute or more, or 3 minutes or more, and for example, 60 minutes or less, 30 minutes or less, 20 minutes or less, or 10 minutes or less. In the heat-drying, for example, a crosslinking reaction and a graft polymerization occur between the (meth)acrylic polymer and the crosslinking agent. Thus, for example, as described above, the amount of the semi-polymer present in the pressure-sensitive adhesive/adhesive coating solution is reduced, and the pressure-sensitive adhesive/adhesive layer is less liable to permeate into the voids of the void-containing layer. In the manner as described above, the pressure-sensitive adhesive/adhesive layer used in the laminate of the present disclosure can be produced.

Next, the pressure-sensitive adhesive/adhesive layer is attached to the void-containing layer (attaching), as described above. Although this method is not particularly limited, for example, as described above, the pressure-sensitive adhesive/adhesive layer may be formed on the void-containing layer of the present disclosure by attaching an adhesive tape or the like, in which the pressure-sensitive adhesive/adhesive layer of the present disclosure is laminated on a base, onto the void-containing layer, so that the pressure-sensitive adhesive/adhesive layer side faces the void-containing layer. In this manner, the laminate of the present disclosure can be produced.

The thickness of the pressure-sensitive adhesive/adhesive layer is not particularly limited and is, for example, 0.1 to 100 μm, 5 to 50 μm, 10 to 30 μm, or 12 to 25 μm.

The method for producing the laminate of the present disclosure may further include, for example, heating the pressure-sensitive adhesive/adhesive layer and the void-containing layer after the attaching. Hereinafter, the heating may be referred to as "aging". In the heating (aging), the heating temperature is not particularly limited, and may be, for example, 40°C or more, 45°C or more, or 50°C or more, and may be, for example, 80°C or less, 70°C or less, 60°C or less, or 55°C or less. The heating time may be, for example, 1 minute or more, 10 minutes or more, 60 minutes or more, or 1800 minutes or more, and may be, for example, 3000 minutes or less, 2800 minutes or less, 2500 minutes or less, or 2000 minutes or less. In the aging, for example, the intermediate layer is formed by uniting the void-containing layer and the pressure-sensitive adhesive/adhesive layer. Then, for example, the intermediate layer serves as a stopper, which makes it possible to suppress a reduction in the void fraction caused by the pressure-sensitive adhesive filling the voids of the void-containing layer. The uniting of the void-containing layer and the pressure-sensitive adhesive/adhesive layer may be achieved by the pressure-sensitive adhesive/adhesive layer embedding in the voids of the void-containing layer to cause chemical bond, or simply embedding in the voids of the void-containing layer.

The void-containing layer can be protected from physical damage (particularly abrasion) by the pressure-sensitive adhesive/adhesive layer. It is preferable that the pressure-sensitive adhesive/adhesive layer has excellent pressure resistance so that the void-containing layer does not collapse even when used as a (baseless) void-containing layer-containing pressure-sensitive adhesive/adhesive sheet having no base, however, is not limited thereto.

As described above, the laminate of the present disclosure obtained in this manner may be, for example, further laminated on another film (layer) to form a laminated structure including the void-containing layer (porous structure). In this case, the respective components of the laminated structure may be laminated, for example, via the pressure-sensitive adhesive/adhesive layer (pressure-sensitive adhesive or adhesive).

The respective components may be laminated by continuous processing using a long film (e.g., the so-called "roll-to-roll" process) in terms of efficiency, for example. When the base is a molded product, an element, or the like, the components that have been subjected to batch processing may be laminated on the base.

## 3. Optical member

The optical member of the present disclosure includes the laminate of the present disclosure as described above. The optical member of the present disclosure is characterized by including the laminate of the present disclosure, and other configurations thereof are not limited in any way. The optical member of the present disclosure may further include, for example, other layer(s) in addition to the laminate. The optical member of the present disclosure may be, for example, in the form of a roll.

4. Optical device

The optical device of the present disclosure includes the optical member of the present disclosure as described above. The optical device of the present disclosure is not particularly limited and may be, for example, an image display device or a lighting device. Examples of the image display device include a liquid crystal display, an organic EL (Electro Luminescence) display, and a micro LED (Light Emitting Diode) display. Examples of the lighting device include an organic EL lighting device.

Examples

Next, Examples of the present disclosure will be described. Note that, the present disclosure is not limited to the following Examples.

In the following reference examples, examples, and comparative examples, the number (relative usage amount) of each substance is the mass part (weight part) unless otherwise specified. In the following reference examples, examples, and comparative examples, the pressure-sensitive adhesive (pressure-sensitive adhesive composition) to be described below was used as the pressure-sensitive adhesive/adhesive. In the following reference examples, examples, and comparative examples, the "pressure-sensitive adhesive layer" corresponds to the "pressure-sensitive adhesive/adhesive layer". That is, in the following reference examples, examples, and comparative examples, the "pressure-sensitive adhesive layer" and the "pressure-sensitive adhesive/adhesive layer" are synonymous with each other unless otherwise specified.

In the following reference examples, examples, and comparative examples, the nanoindentation hardness, the refractive index of the void-containing layer measured in the state of the laminate (refractive index (laminate)), the refractive index measured in the state of the void-containing layer alone (refractive index (void-containing layer)), the peel strength, and the void-remaining rate were each measured by the methods described in the embodiments.

In the pressure-sensitive adhesive/adhesive layer in the following reference examples, examples, and comparative examples, it is presumed that, by heat-drying the applied pressure-sensitive adhesive, a polymer (acrylic polymer) was crosslinked by a crosslinking agent, and a crosslinked structure was formed. However, the crosslinked structure was not examined.

Reference Example 1: Forming the pressure-sensitive adhesive/adhesive layer (pressure-sensitive adhesive 1)

The pressure-sensitive adhesive/adhesive layer of the present reference example (Reference Example 1) was formed by the following procedures (1) to (3).

(1) Preparing acrylic polymer solution

A four-necked flask equipped with a stirring blade, a thermometer, a nitrogen-gas inlet tube, and a condenser was charged with 90.7 parts of butyl acrylate, 6 parts of N-acryloylmorpholine, 3 parts of acrylic acid, 0.3 parts of 2-hydroxybutyl acrylate, and 0.1 parts by weight of 2,2'-azobisisobutyronitrile as a polymerization initiator, together with 100 g of ethyl acetate. Next, the contents of the four-necked flask were gently stirred while introducing nitrogen gas to perform nitrogen replacement. Thereafter, polymerization reaction for 8 hours was performed while maintaining the liquid temperature in the four-necked flask at around 55°C, thereby preparing an acrylic polymer solution.

(2) Preparing acrylic pressure-sensitive adhesive composition

To 100 parts of solid contents of the acrylic polymer solution obtained in (1), 0.2 part of an isocyanate-based crosslinking agent (trade name: "Coronate L," manufactured by Nippon Polyurethane Industry Co.,Ltd., an adduct of tolylene diisocyanate and trimethylolpropane), 0.3 part of benzoyl peroxide (trade name: "Niper BMT," manufactured by NOF CORPORATION), and 0.1 part of γ-glycidoxypropylmethoxysilane (trade name: "KBM-403," manufactured by Shin-Etsu Chemical Co., Ltd.) were blended to prepare an acrylic pressure-sensitive adhesive composition (acrylic pressure-sensitive adhesive solution).

(3) Forming pressure-sensitive adhesive/adhesive layer

The acrylic pressure-sensitive adhesive composition obtained in (2) was applied to one surface of a silicone-treated polyethylene terephthalate (PET) film (manufactured by Mitsubishi Polyester Film, Inc., thickness: 38 μm) so that the thickness of the adhesive layer after drying be 10 μm, and dried at 150°C for 3 minutes to form a pressure-sensitive adhesive 1 as the pressure-sensitive adhesive layer (pressure-sensitive adhesive/adhesive layer).

Reference Example 2: Forming pressure-sensitive adhesive/adhesive layer (pressure-sensitive adhesive 2)

The pressure-sensitive adhesive/adhesive layer of the present reference example (Reference Example 2) was formed by the following procedures (1) to (3).

(1) Preparing (meth)acrylic polymer (A1)

A four-necked flask equipped with a stirring blade, a thermometer, a nitrogen-gas inlet tube, and a condenser was charged with a monomer mixture containing 79.5 parts of butyl acrylate, 15 parts of N-acryloyl morpholine, 5 parts of acrylic acid, and 0.5 parts of 4-hydroxybutyl acrylate. Then, 0.1 parts of 2,2'-azobisisobutyronitrile were charged together with 70 parts of ethyl acetate as a polymerization initiator relative to 100 parts of the monomer mixture, nitrogen gas was introduced while gently stirring the mixture to perform nitrogen replacement. Thereafter, polymerization reaction for 2 hours was performed while maintaining the liquid temperature in the four-necked flask at around 55°C, thereby preparing a solution of (meth)acrylic polymer (A1) having a weight average molecular weight (Mw) of 3 million and Mw/Mn of 2.5.

(2) Preparing (meth)acrylic pressure-sensitive adhesive composition

To 100 parts of solid contents of the obtained (meth)acrylic polymer (A1) solution, 0.2 parts of an isocyanate crosslinking agent (trade name: "Coronate L," manufactured by Nippon Polyurethane Industry Co.,Ltd., an adduct of tolylene diisocyanate and trimethylolpropane), and 0.2 parts of an epoxy crosslinking agent, 1,3-bis(N,N-diglycidylaminomethyl)cyclohexane (trade name: "TETRAD C," manufactured by MITSUBISHI GAS CHEMICAL COMPANY, INC.) were blended to prepare a solution of an acrylic pressure-sensitive adhesive composition.

(3) Forming pressure-sensitive adhesive/adhesive layer

Next, the acrylic pressure-sensitive adhesive composition solution was applied onto one surface of a polyethylene terephthalate (PET) film (separator film, MRF38, manufactured by Mitsubishi Chemical Polyester Film Corporation) treated with a silicone peeling agent, so that the thickness of the pressure-sensitive adhesive layer after drying be 10 μm, and was dried at 155°C for 1 minute to form a pressure-sensitive adhesive 2 as the pressure-sensitive adhesive layer (pressure-sensitive adhesive/adhesive layer) on the surface of the separator film.

Reference Example 3: Forming pressure-sensitive adhesive/adhesive layer (pressure-sensitive adhesive 3)

The pressure-sensitive adhesive/adhesive layer of the present reference example (Reference Example 3) was formed by the following procedures (1) to (3).

(1) Preparing acrylic polymer solution

A four-necked flask equipped with a stirring blade, a thermometer, a nitrogen-gas inlet tube, and a condenser was charged with 99 parts of butyl acrylate, 1 part of 4-hydroxybutyl acrylate, and 0.1 parts of 2,2'-azobisisobutyronitrile as a polymerization initiator, together with 100 of ethyl acetate. Next, the contents of the four-necked flask were gently stirred while introducing nitrogen gas to perform nitrogen replacement. Thereafter, polymerization reaction for 8 hours was performed while maintaining the liquid temperature in the four-necked flask at around 55°C, thereby preparing an acrylic polymer solution.

(2) Preparing acrylic pressure-sensitive adhesive composition

To 100 parts of solid contents of the acrylic polymer solution obtained in (1), 0.1 part of an isocyanate crosslinking agent (trade name: "Takenate D110N," trimethylolpropane xylylene diisocyanate, manufactured by MITSUI TAKEDA CHEMICALS, INC.), 0.1 parts of benzoyl peroxide (trade name: "Niper BMT," manufactured by NOF CORPORATION), and 0.2 parts of γ-glycidoxypropylmethoxysilane (trade name: "KBM-403," manufactured by Shin-Etsu Chemical Co., Ltd.) were blended to prepare an acrylic pressure-sensitive adhesive composition.

(3) Forming pressure-sensitive adhesive/adhesive layer

The acrylic pressure-sensitive adhesive composition solution obtained in (2) was applied onto one surface of a polyethylene terephthalate (PET) film (separator film, MRF38, manufactured by Mitsubishi Chemical Polyester Film Corporation) treated with a silicone peeling agent, and was dried at 150°C for 3 minutes to form a pressure-sensitive

adhesive 3 as the pressure-sensitive adhesive layer (pressure-sensitive adhesive/adhesive layer) having a thickness of 20 μm, on the surface of the separator film.

Examples 1 to 9 and Comparative Examples 1 to 3: Producing laminate

The laminates of Examples 1 to 9 and Comparative Examples 1 to 3 were produced by the following methods.

Example 1

(1) Gelling silicon compound (synthesizing gelled silica)

1.90 g of methyltrimethoxysilane (MTMS) as a precursor of a silicon compound, and 0.1 g of tetraethoxysilane (TEOS) were dissolved in 4.4 g of dimethyl sulfoxide (DMSO) to prepare a mixed solution A. The mixed solution A was added with 1.0 g of a 0.01 mol/L oxalic acid aqueous solution, and stirred at room temperature for 30 minutes to hydrolyze MTMS, thereby producing a mixed solution B including tris(hydroxy)methylsilane and tetra(hydroxy)silane. Then, 0.38 g of 28 wt% aqueous ammonia and 0.2 g of pure water were added to 5.5 g of DMSO, followed by further addition of the above mixed solution B, and stirred at room temperature for 15 minutes to gell tris(hydroxy)methylsilane and tetra(hydroxy) silane, thereby obtaining a mixed solution C including a gelled silicon compound.

(2) Aging treatment

The mixed solution C including the gelled silicon compound prepared as described above was incubated as it is at 40°C for 20 hours to perform an aging treatment.

(3) Pulverization treatment (pulverizing gel)

Next, the gelled silicon compound that had been subjected to the aging treatment as described above was crushed into granules of several millimeters to several centimeters in size using a spatula. Then, 40 g of isopropyl alcohol (IPA) was added to the mixed solution C, lightly stirred, and allowed to stand at room temperature for 6 hours to decant the solvent and catalyst from the gel. The same decantation treatment was repeated three times to replace the solvent, thereby obtaining a mixed solution D. Subsequently, the gelled silicon compound in the mixed solution D was subjected to a pulverization treatment (high-pressure media-less pulverization). The pulverization treatment (high-pressure media-less pulverization) was carried out using a homogenizer (trade name: "UH-50", manufactured by SMT Co.,Ltd) by weighing 1.85 g of the gelled compound in the mixed solution D and 1.15 g of IPA into a 5 cc screw vial and performing pulverizing under conditions of 50 W and 20 kHz for 2 minutes.

By this pulverization treatment, the gelled silicon compound in the mixed solution D was pulverized, and the mixed solution D thus became a sol solution E including the pulverized products. The volume-average particle diameter, indicating the particle size distribution of the pulverized products in the sol solution E, was examined using a dynamic light scattering nano particle size analyzer (model UPA-EX150, manufactured by NIKKISO CO., LTD.) and found to be 0.50 to 0.70 μm. Furthermore, 0.75 g of the sol solution E was added with 0.124 g of a 1.5 wt% MEK (methyl ethyl ketone) solution of a photo-base generator (trade name: WPBG-266, manufactured by FUJIFILM Wako Pure Chemical Corporation) as a precursor of a crosslinking reaction accelerator, and 0.036 g of a 5% MEK solution of a crosslinking aid (bis(trimethoxysilyl) hexane) were added in this proportions to obtain a coating solution for forming a low-refractive index layer 1.

The coating solution for forming a low-refractive index layer was applied onto an acrylic base and dried to form a void-containing layer having a film thickness of around 850 nm (void fraction: 59 vol%). The application was performed using a wire bar. The drying temperature was set at 100°C. The drying time was set at 2 minutes. Next, UV irradiation (300 mJ) was performed from the void-containing layer side to bond the pulverized products of the gelled compound to each other (bonding). It is presumed that the bonding of the pulverized products of the gelled compound in the bonding includes at least either of crosslinking bonds (covalent bonds) in which the pulverized products are directly bonded to each other without a crosslinking aid, or crosslinking bonds (covalent bonds) through the crosslinking aid. Thereafter, the pressure-sensitive adhesive 1 having a thickness of 10 μm was attached onto the surface of the void-containing layer, followed by aging at 50°C for 30 hours, to produce the void-containing layer of the present example. In addition, using the produced void-containing layer, the laminate of the present example was produced.

Example 2

Except that the addition amounts of the photo-base generator and the crosslinking aid in Example 1 were changed to the proportion of : 0.186 g of a 1.5 wt% MEK (methyl ethyl ketone) solution of the photo-base generator (trade

name: WPBG-266, manufactured by FUJIFILM Wako Pure Chemical Corporation), and 0.054 g of a 5% MEK solution of the crosslinking aid (1,6-bis(trimethoxysilyl)hexane), relative to 0.75 g of the sol solution E, the same operations as in Example 1 were carried out to produce the void-containing layer of the present example. In addition, using the produced void-containing layer, the laminate of the present example was produced.

Example 3

Except that the addition amount of tetraethoxysilane (TEOS) in Example 1 was changed to 0.2 g, the same operations as in Example 1 were carried out to produce the laminate of the present example.

Example 4

Except that the addition amount of tetraethoxysilane (TEOS) in Example 1 was changed to 0.2 g, the same operations as in Example 2 were carried out to produce the void-containing layer of the present example. In addition, using the produced void-containing layer, the laminate of the present example was produced.

Example 5

Except that the pressure-sensitive adhesive 2 was used instead of the pressure-sensitive adhesive 1 used in Example 1, the same operations as in Example 1 were carried out to produce the void-containing layer of the present example. In addition, using the produced void-containing layer, the laminate of the present example was produced.

Example 6

Except that the addition amount of tetraethoxysilane (TEOS) in Example 1 was changed to 0.3 g, the same operations as in Example 1 were carried out to produce the void-containing layer of the present example. In addition, using the produced void-containing layer, the laminate of the present example was produced.

Example 7

Except that the addition amount of tetraethoxysilane (TEOS) in Example 1 was changed to 0.4 g, the same operations as in Example 1 were carried out to produce the void-containing layer of the present example. In addition, using the produced void-containing layer, the laminate of the present example was produced.

Example 8

Except that 0.95 g of methyltrimethoxysilane (MTMS), a precursor of the silicon compound, was dissolved in 2.2 g of dimethyl sulfoxide (DMSO) and no tetraethoxysilane (TEOS) was added, the same operations as in Example 1 were carried out to produce the laminate of the present example.

Example 9

Except that the addition amount of tetraethoxysilane (TEOS) in Example 1 was changed to 0.2 g, and the addition amounts of the photo-base generator and the bis-crosslinking accelerator were changed to: 0.062 g of a 1.5 wt% MEK (methyl ethyl ketone) solution of the photo-base generator (trade name: WPBG-266, manufactured by FUJIFILM Wako Pure Chemical Corporation), and 0.018 g of a 5% MEK solution of the bis-crosslinking accelerator ((trimethoxysilyl) hexane), relative to 0.75 g of the sol solution E, the same operations as in Example 1 were carried out to produce the void-containing layer of the present example. In addition, using the produced void-containing layer, the laminate of the present example was produced.

Comparative Example 1

Except that no tetraethoxysilane (TEOS) was added, the same operations as in Example 9 were carried out to produce the void-containing layer of the present comparative example. In addition, using the produced void-containing layer, the laminate of the present comparative example was produced.

Comparative Example 2

Except that the pressure-sensitive adhesive 2 was used instead of the pressure-sensitive adhesive 1 used in Comparative Example 1, the same operations as in Comparative Example 1 were carried out to produce the void-containing layer of the present comparative example. In addition, using the produced void-containing layer, the laminate of the present comparative example was produced.

Comparative Example 3

Except that the pressure-sensitive adhesive 3 was used instead of the pressure-sensitive adhesive 1 used in Comparative Example 1, the same operations as in Comparative Example 1 were carried out to produce the void-containing layer of the present comparative example. In addition, using the produced void-containing layer, the laminate of the present comparative example was produced.

Table 1

| Example/Comparative example | Tetraethoxysilane (TEOS) blending amount (mol%) | Pressure-sensitive adhesive/adhesive layer | Nanoindentation hardness (MPa) | Additive (mol%) | | Refractive index (laminate) | Refractive index (void-containing layer) | Peel strength (N/25 mm) | Void-remaining rate of durability test (85 °C/85% 500h) |
|---|---|---|---|---|---|---|---|---|---|
| | | | | Crosslinking aid (KBM3066) | Precursor of crosslinking reaction accelerator (WPBG266) | | | | |
| Example 1 | 3.5 | Pressure-sensitive adhesive 1 | 0.659 | 3.2 | 2.2 | 1.214 | 1.199 | 5.67 | >85% |
| Example 2 | 3.5 | Pressure-sensitive adhesive 1 | 0.659 | 4.8 | 3.3 | 1.239 | 1.223 | 9.08 | >85% |
| Example 3 | 6.9 | Pressure-sensitive adhesive 1 | 0.659 | 3.2 | 2.2 | 1.206 | 1.195 | 5.70 | >85% |
| Example 4 | 6.9 | Pressure-sensitive adhesive 1 | 0.659 | 4.8 | 3.3 | 1.239 | 1.215 | 10.04 | >85% |
| Example 5 | 6.9 | Pressure-sensitive adhesive 2 | 1.08 | 3.2 | 2.2 | 1.202 | 1.195 | 3.67 | >85% |
| Example 6 | 10.5 | Pressure-sensitive adhesive 1 | 0.659 | 3.2 | 2.2 | 1.225 | 1.207 | 7.28 | >85% |
| Example 7 | 14.0 | Pressure-sensitive adhesive 1 | 0.659 | 3.2 | 2.2 | 1.230 | 1.207 | 7.91 | >85% |
| Example 8 | 0 | Pressure-sensitive adhesive 1 | 0.659 | 3.2 | 2.2 | 1.210 | 1.199 | 3.56 | >85% |
| Example 9 | 6.9 | Pressure-sensitive adhesive 1 | 0.659 | 1.6 | 1.1 | 1.196 | 1.183 | 3.82 | >85% |
| Comparative example 1 | 0 | Pressure-sensitive adhesive 1 | 0.659 | 1.6 | 1.1 | 1.192 | 1.179 | 2.13 | >85% |
| Comparative example 2 | 0 | Pressure-sensitive adhesive 2 | 1.08 | 1.6 | 1.1 | 1.191 | 1.180 | 1.78 | >85% |
| Comparative example 3 | 0 | Pressure-sensitive adhesive 3 | 0.306 | 1.6 | 1.6 | 1.191 | 1.180 | >10 | <10% |

As shown in Table 1, the laminates of the examples exhibited good interlayer peel strength of 3 N/25 mm or more, whereas the laminates of the comparative examples all had interlayer peel strength of less than 3 N/25 mm.

FIG. 4 shows a graph illustrating the relationship between peel strength and refractive index for the examples and comparative examples in which the nanoindentation hardness was 0.5 MPa or more in the laminate state. In FIG. 4, the equation "Y = 80.409x - 93.718" is a linear function obtained by averaging two points from Comparative Example 1 and Example 8, in which no tetrafunctional silane compound was blended and only the amounts of the substances generating the crosslinking aid and the crosslinking reaction accelerator were changed. The equation "Y = 136.4x - 159.92" is a linear function obtained by averaging two points from Examples 1 and 2, in which the tetrafunctional silane compound was blended at 3.5 mol% relative to the trifunctional silane compound and only the amounts of the substances generating the crosslinking aid and the crosslinking reaction accelerator were changed. The equation "Y = 141.37x - 165.06" is a linear function obtained by averaging three points from Examples 3, 4, and 9, in which the tetrafunctional silane compound was blended at 6.9 mol% relative to the trifunctional silane compound and only the amounts of the substances generating the crosslinking aid and the crosslinking reaction accelerator were changed.

As shown in FIG. 4, all of the examples exhibited a peel strength of the interlayer between the void-containing layer and the pressure-sensitive adhesive/adhesive layer of 3 N/25 mm or more. In addition, the laminates of all of the examples satisfied the condition (1) ($Y \geq 80X - 93.8$) described in the embodiments. Furthermore, it was found that the laminates of the examples, which includes the tetrafunctional silane compound as the silane compound, exhibited higher peel strength than the void-containing layers, which have the same refractive index but do not include the tetrafunctional silane compound, satisfying the condition (2) ($Y \geq 100X - 117$) described in the embodiments. Moreover, the results showed that increase in the proportions of the crosslinking aid and the crosslinking reaction accelerator (precursor of the crosslinking reaction accelerator) leads to the improvement of the peel strength.

SUPPLEMENTARY NOTE

The whole or part of the example embodiments disclosed above can be described as, but not limited to, the following supplementary notes.

(Supplementary Note 1)

A laminate, including:

a void-containing layer, and
a pressure-sensitive adhesive/adhesive layer, wherein
the pressure-sensitive adhesive/adhesive layer is directly laminated on one surface or both surfaces of the void-containing layer,
a refractive index of the void-containing layer measured in a state of the laminate is 1.30 or less,
nanoindentation hardness measured by pushing an indenter of a nano indenter into the pressure-sensitive adhesive/adhesive layer for 2000 nm is 0.5 MPa or more, and
peel strength of interlayer between the void-containing layer and the pressure-sensitive adhesive/adhesive layer measured by a tensile testing machine at a tensile speed of 0.3 m/min is 3 N/25 mm or more.

(Supplementary Note 2)

The laminate according to Supplementary Note 1, wherein
the peel strength is 3.5 N/25 mm or more.

(Supplementary Note 3)

The laminate according to Supplementary Note 1 or 2, wherein
the refractive index is 1.25 or less.

(Supplementary Note 4)

The laminate according to any one of Supplementary Notes 1 to 3, wherein
the laminate satisfies the following condition (1) where X represents the refractive index and Y represents the peel strength,

$$\text{condition (1)}: Y \geq 80X - 93.8.$$

(Supplementary Note 5)

The laminate according to any one of Supplementary Notes 1 to 3, wherein
the laminate satisfies the following condition (2) where X represents the refractive index and Y represents the peel strength,

$$\text{condition (2)}: Y \geq 100X - 117.$$

(Supplementary Note 6)

The laminate according to any one of Supplementary Notes 1 to 5, wherein
the nanoindentation hardness is 1.2 MPa or less.

(Supplementary Note 7)

The laminate according to any one of Supplementary Notes 1 to 6, wherein
a void-remaining rate of the void-containing layer after a heat and humidity durability test that holds a temperature at 85°C and a humidity at 85% RH for 500 hours is 10 vol% or more.

(Supplementary Note 8)

The laminate according to any one of Supplementary Notes 1 to 7, further including:

an intermediate layer present between the void-containing layer and the pressure-sensitive adhesive/adhesive layer, wherein
the intermediate layer is a layer formed by uniting the void-containing layer and the pressure-sensitive adhesive/adhesive layer.

(Supplementary Note 9)

The laminate according to any one of Supplementary Notes 1 to 8, wherein
the void-containing layer includes a compound obtained by condensation or partial condensation of a silane compound.

(Supplementary Note 10)

The laminate according to Supplementary Note 9, wherein
the silane compound includes a monofunctional to trifunctional silane compound and a tetrafunctional silane compound.

(Supplementary Note 11)

The laminate according to Supplementary Note 10, wherein
the content ratio of the tetrafunctional silane compound relative to the amount of substance of the monofunctional to trifunctional silane compound is 1 to 25 mol%.

(Supplementary Note 12)

The laminate according to any one of Supplementary Notes 9 to 11, wherein

the void-containing layer is a void-containing layer in which pulverized products of a gelled silicon compound are chemically bonded to each other, and
the pulverized product of the gelled silicon compound is a compound obtained by condensation or partial condensation of the silane compound.

(Supplementary Note 13)

The laminate according to Supplementary Note 12, wherein

the void-containing layer is a void-containing layer in which the pulverized products of the gelled silicon compound are chemically bonded to each other under a coexistence condition with an additive,
the additive includes at least either of a crosslinking reaction accelerator or a precursor of the crosslinking reaction accelerator, and
the precursor is a substance that generates the crosslinking reaction accelerator by light or heat.

(Supplementary Note 14)

The laminate according to Supplementary Note 13, wherein
the crosslinking reaction accelerator is an acidic substance or a basic substance.

(Supplementary Note 15)

The laminate according Supplementary Note 13 or 14, wherein
the total content ratio of the crosslinking reaction accelerator and the precursor relative to the total amount of substance of the monofunctional to trifunctional silane compound and the tetrafunctional silane compound is 1 mol% or more.

(Supplementary Note 16)

The laminate according to any one of Supplementary Notes 12 to 15, wherein

the void-containing layer is a void-containing layer in which the pulverized products of the gelled silicon compound are chemically bonded to each other under a coexistence condition with an additive, and
the additive includes a crosslinking aid.

(Supplementary Note 17)

The laminate according to Supplementary Note 16, wherein
the total content ratio of the crosslinking aid relative to the total amount of substance of the monofunctional to trifunctional silane compound and the tetrafunctional silane compound is 1 mol% or more.

(Supplementary Note 18)

The laminate according to any one of Supplementary Notes 1 to 8, wherein

the void-containing layer is a void-containing layer in which the pulverized products of the gelled silicon compound are chemically bonded to each other under a coexistence condition with an additive,
the gelled silicon compound is a compound obtained by condensation or partial condensation of a silane compound,
the additive includes at least either of a crosslinking reaction accelerator or a precursor of the crosslinking reaction accelerator, and a crosslinking aid,
the total content ratio of the crosslinking reaction accelerator and the precursor relative to the total amount of substance of the silane compound is 1.5 mol% or more, and
the total content ratio of the crosslinking aid relative to the total amount of substance of the silane compound is 2.0 mol% or more.

(Supplementary Note 19)

A method for producing the laminate according to any one of Supplementary Notes 1 to 18, including:

forming the void-containing layer, and
forming the pressure-sensitive adhesive/adhesive layer on the void-containing layer.

(Supplementary Note 20)

The method according to Supplementary Note 19, wherein

the forming the void-containing layer further includes synthesizing gelled silica, pulverizing gel, and bonding,
the synthesizing gelled silica includes synthesizing a gelled silicon compound by condensation or partial condensation of a silane compound,
the silane compound includes a monofunctional to trifunctional silane compound and a tetrafunctional silane compound,
the pulverizing gel includes obtaining a pulverized product by pulverizing the gelled silicon compound, and
the bonding includes chemically bonding the pulverized products to each other.

(Supplementary Note 21)

The method according to Supplementary Note 19, wherein

he forming the void-containing layer further includes synthesizing gelled silica, pulverizing gel, and bonding,
the synthesizing gelled silica includes synthesizing a gelled silicon compound by condensation or partial condensation of a silane compound,
the pulverizing gel includes obtaining a pulverized product by pulverizing the gelled silicon compound,
the bonding includes chemically bonding the pulverized products to each other under a coexistence condition with an additive, and
the additive includes at least either of a crosslinking reaction accelerator or a precursor of the crosslinking reaction accelerator, and a crosslinking aid.

(Supplementary Note 22)

An optical member including the laminate according to any one of Supplementary Notes 1 to 18.

(Supplementary Note 23)

An optical device including the optical member according to Supplementary Note 22.

(Supplementary Note 24)

The optical device according to Supplementary Note 23 that is an image display device, or an lighting device.

Industrial Applicability

As described above, the present disclosure can provide a laminate, an optical member, and an optical device that have a low refractive index and excellent mechanical strength. The application of the present disclosure is not particularly limited. For example, the optical device of the present disclosure may be an image display device, a lighting device, or the like, but not limited thereto. Examples of the image display device include a liquid crystal display, an organic EL display, and a micro LED display. Examples of the lighting device include an organic EL lighting device. Further, the application of the laminate of the present disclosure is not limited to the optical member and the optical device of the present disclosure and may be any application. The laminate of the present disclosure can be used for a wide range of applications.
This application claims priority from Japanese Patent Application No. 2023-107488 filed on June 29th, 2023. The entire subject matter of the Japanese Patent Application is incorporated herein by reference.

Reference Signs List

| | |
|---|---|
| 10, 10a, 10b, 10c, 10d, 10e: | laminate |
| 11: | void-containing layer |
| 12: | pressure-sensitive adhesive/adhesive layer |
| 13: | intermediate layer |
| 14: | base |

## Claims

1. A laminate, comprising:

   a void-containing layer, and
   a pressure-sensitive adhesive/adhesive layer, wherein
   the pressure-sensitive adhesive/adhesive layer is directly laminated on one surface or both surfaces of the void-containing layer,
   a refractive index of the void-containing layer measured in a state of the laminate is 1.30 or less,
   nanoindentation hardness measured by pushing an indenter of a nano indenter into the pressure-sensitive adhesive/adhesive layer for 2000 nm is 0.5 MPa or more, and
   peel strength of interlayer between the void-containing layer and the pressure-sensitive adhesive/adhesive layer measured by a tensile testing machine at a tensile speed of 0.3 m/min is 3 N/25 mm or more.

2. The laminate according to claim 1, wherein
   the peel strength is 3.5 N/25 mm or more.

3. The laminate according to claim 1, wherein
   the refractive index is 1.25 or less.

4. The laminate according to claim 1, wherein
   the laminate satisfies the following condition (1) where X represents the refractive index and Y represents the peel strength,

$$\text{condition (1): } Y \geq 80X - 93.8.$$

5. The laminate according to claim 1, wherein
   the laminate satisfies the following condition (2) where X represents the refractive index and Y represents the peel strength,

$$\text{condition (2): } Y \geq 100X - 117.$$

6. The laminate according to claim 1, wherein
   the nanoindentation hardness is 1.2 MPa or less.

7. The laminate according to claim 1, wherein
   a void-remaining rate of the void-containing layer after a heat and humidity durability test that holds a temperature at 85°C and a humidity at 85% RH for 500 hours is 10 vol% or more.

8. The laminate according to claim 1, further comprising:

   an intermediate layer present between the void-containing layer and the pressure-sensitive adhesive/adhesive layer, wherein
   the intermediate layer is a layer formed by uniting the void-containing layer and the pressure-sensitive adhesive/adhesive layer.

9. The laminate according to claim 1, wherein
   the void-containing layer includes a compound obtained by condensation or partial condensation of a silane compound.

10. The laminate according to claim 9, wherein
    the silane compound includes a monofunctional to trifunctional silane compound and a tetrafunctional silane compound.

11. The laminate according to claim 10, wherein
    the content ratio of the tetrafunctional silane compound relative to the amount of substance of the monofunctional to

trifunctional silane compound is 1 to 25 mol%.

**12.** The laminate according to claim 9, wherein

the void-containing layer is a void-containing layer in which pulverized products of a gelled silicon compound are chemically bonded to each other, and
the pulverized product of the gelled silicon compound is a compound obtained by condensation or partial condensation of the silane compound.

**13.** The laminate according to claim 12, wherein

the void-containing layer is a void-containing layer in which the pulverized products of the gelled silicon compound are chemically bonded to each other under a coexistence condition with an additive,
the additive includes at least either of a crosslinking reaction accelerator or a precursor of the crosslinking reaction accelerator, and
the precursor is a substance that generates the crosslinking reaction accelerator by light or heat.

**14.** The laminate according to claim 13, wherein
the crosslinking reaction accelerator is an acidic substance or a basic substance.

**15.** The laminate according to claim 12, wherein

the void-containing layer is a void-containing layer in which the pulverized products of the gelled silicon compound are chemically bonded to each other under a coexistence condition with an additive, and
the additive includes a crosslinking aid.

**16.** An optical member, comprising
the laminate according to any one of claims 1 to 15.

**17.** An optical device, comprising
the optical member according to claim 16.

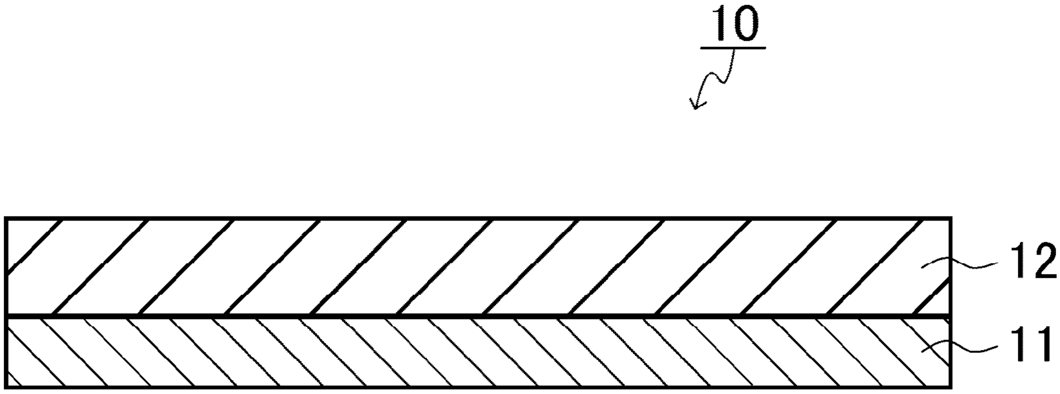


FIG. 1A

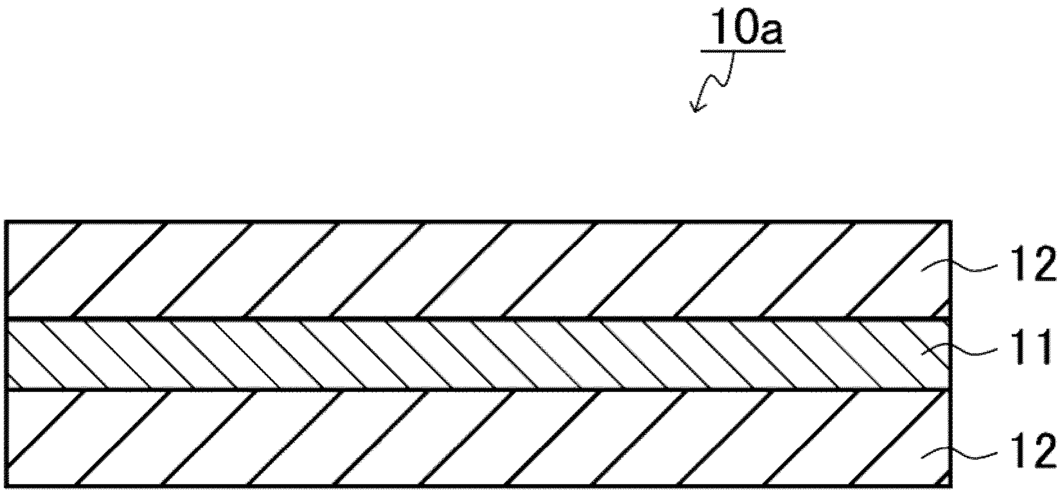


FIG. 1B

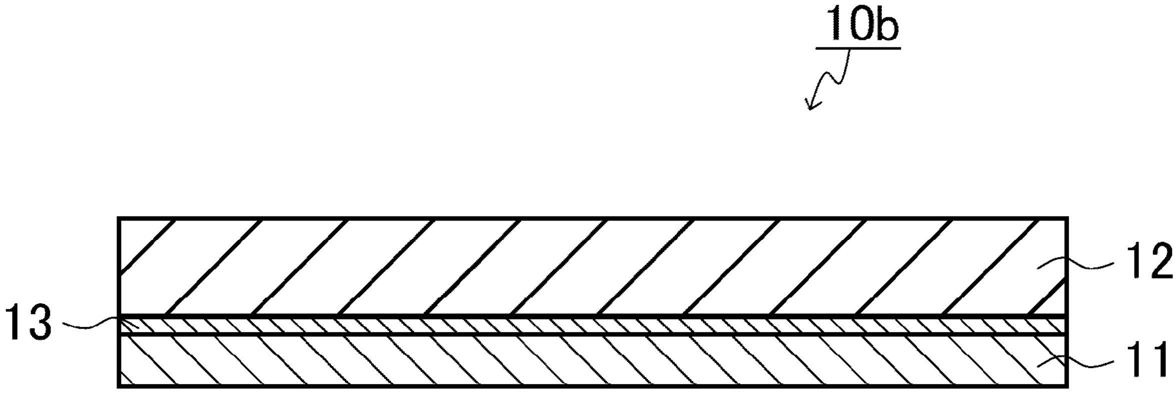


FIG. 2A

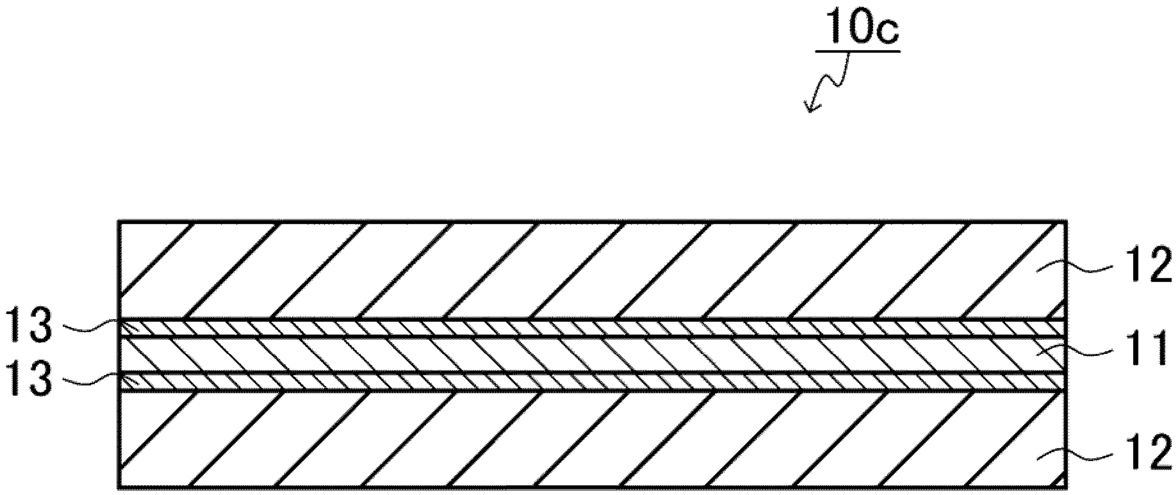


FIG. 2B

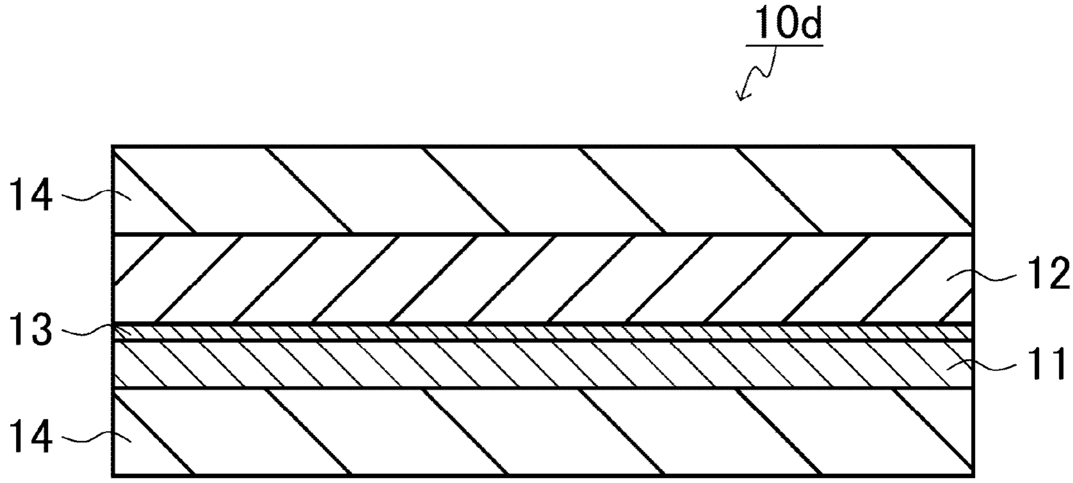


FIG. 3A

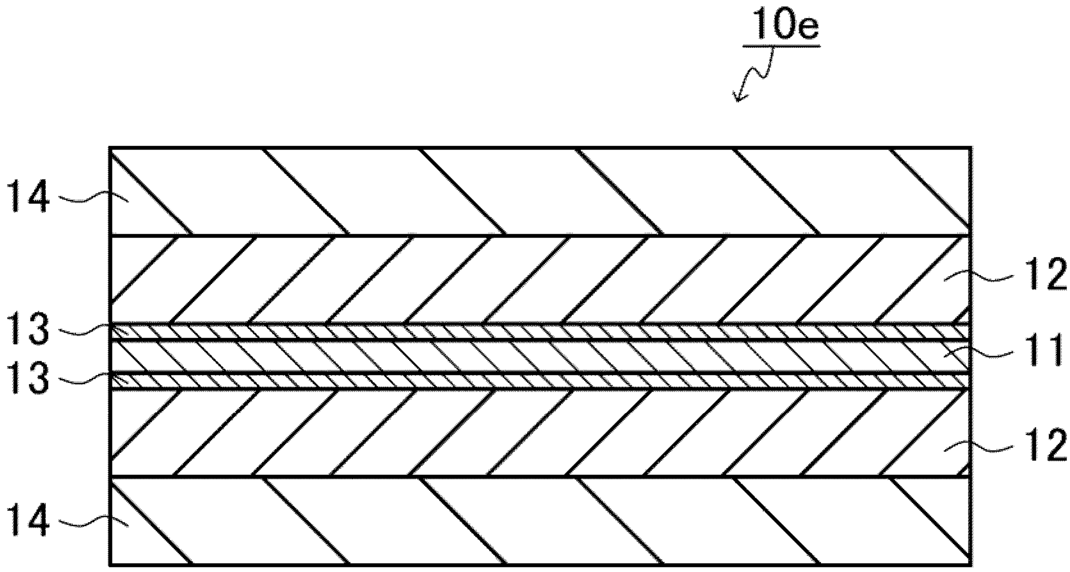


FIG. 3B

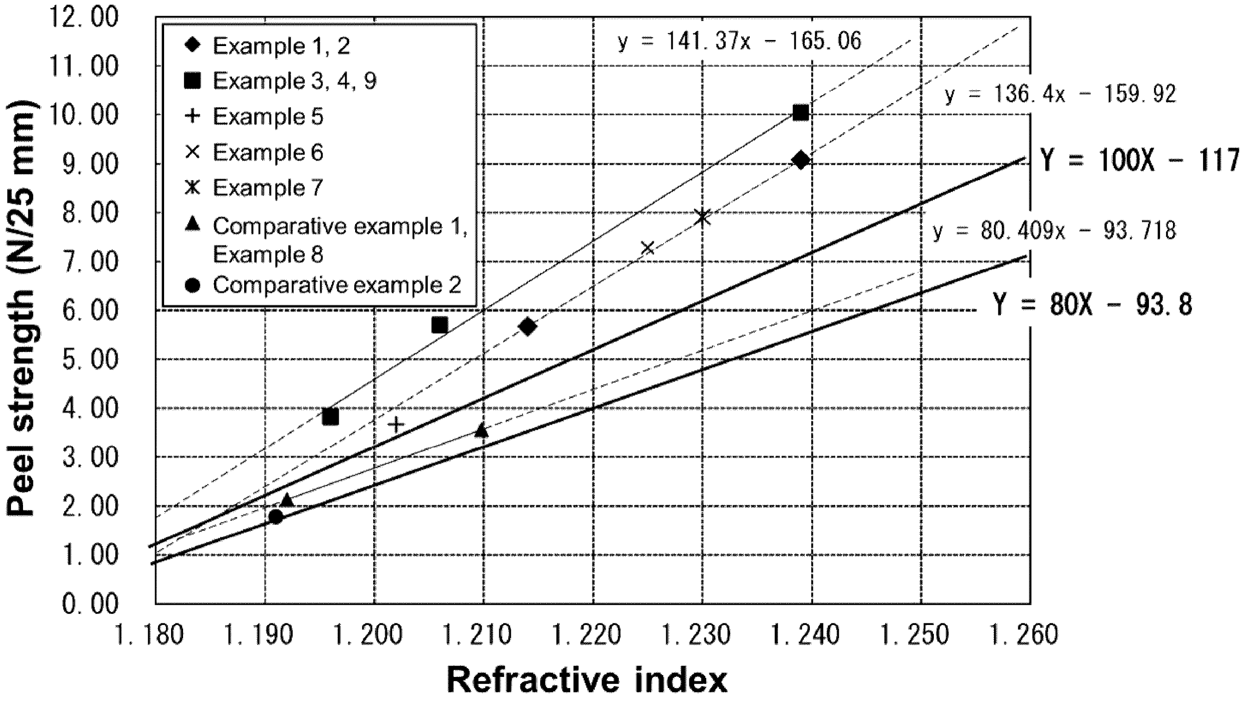
12.00
11.00
10.00
9.00
8.00
7.00
6.00
5.00
4.00
3.00
2.00
1.00
0.00
Peel strength (N/25 mm)
1.180
1.190
1.200
1.210
1.220
1.230
1.240
1.250
1.260
Refractive index
Example 1, 2
Example 3, 4, 9
Example 5
Example 6
Example 7
Comparative example 1, Example 8
Comparative example 2
y = 141.37x - 165.06
y = 136.4x - 159.92
Y = 100X - 117
y = 80.409x - 93.718
Y = 80X - 93.8

FIG. 4

**INTERNATIONAL SEARCH REPORT**

International application No.
**PCT/JP2024/017666**

**A. CLASSIFICATION OF SUBJECT MATTER**

***B32B 27/00***(2006.01)i; ***B32B 3/26***(2006.01)i; ***B32B 7/022***(2019.01)i; ***C09J 7/26***(2018.01)i; ***C09J 7/29***(2018.01)i; ***C09J 201/00***(2006.01)i
FI: B32B27/00 M; B32B3/26 A; B32B7/022; C09J7/26; C09J7/29; C09J201/00

According to International Patent Classification (IPC) or to both national classification and IPC

**B. FIELDS SEARCHED**

Minimum documentation searched (classification system followed by classification symbols)

B32B1/00-43/00; C09J1/00-201/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>Y | JP 2023-51690 A (NITTO DENKO CORPORATION) 11 April 2023 (2023-04-11) claims, paragraphs [0008], [0033]-[0034], [0050]-[0085], [0142]-[0174] | 1–9, 12–17<br><br>10-11 |
| Y | JP 2019-64259 A (NITTO DENKO CORPORATION) 25 April 2019 (2019-04-25) claims, paragraphs [0038]-[0058], [0106]-[0206] | 10-11 |
| A | JP 2022-155373 A (NITTO DENKO CORPORATION) 13 October 2022 (2022-10-13) entire text | 1-17 |
| A | JP 2019-65133 A (NITTO DENKO CORPORATION) 25 April 2019 (2019-04-25) entire text | 1-17 |
| A | JP 2018-123299 A (NITTO DENKO CORPORATION) 09 August 2018 (2018-08-09) entire text | 1-17 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 July 2024** | **23 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (July 2022)

**INTERNATIONAL SEARCH REPORT**

International application No.
**PCT/JP2024/017666**

**C. DOCUMENTS CONSIDERED TO BE RELEVANT**

| Category* | Citation of document, with indication, where appropriate, of the relevant passages | Relevant to claim No. |
|---|---|---|
| A | JP 2017-64954 A (NITTO DENKO CORPORATION) 06 April 2017 (2017-04-06) entire text | 1-17 |

Form PCT/ISA/210 (second sheet) (July 2022)

**INTERNATIONAL SEARCH REPORT**
**Information on patent family members**

International application No.
**PCT/JP2024/017666**

| Patent document cited in search report | Publication date (day/month/year) | Patent family member(s) | Publication date (day/month/year) |
|---|---|---|---|
| JP 2023-51690 A | 11 April 2023 | WO 2023/053912 A1<br>TW 202327863 A | |
| JP 2019-64259 A | 25 April 2019 | US 2020/0223175 A1<br>paragraphs [0047]-[0070], [0121]-[0223], claims<br>WO 2019/065999 A1<br>EP 3686006 A1<br>TW 201922477 A<br>CN 111183031 A<br>KR 10-2020-0062221 A | |
| JP 2022-155373 A | 13 October 2022 | WO 2022/209104 A1<br>EP 4309888 A1<br>TW 202242051 A<br>CN 117157191 A<br>KR 10-2023-0164661 A | |
| JP 2019-65133 A | 25 April 2019 | US 2020/0224059 A1<br>WO 2019/065803 A1<br>EP 3954731 A1<br>TW 201930424 A<br>KR 10-2020-0040895 A<br>CN 111164140 A | |
| JP 2018-123299 A | 09 August 2018 | US 2020/0247089 A1<br>WO 2018/142813 A1<br>EP 3575374 A1<br>TW 201832919 A<br>CN 110234720 A | |
| JP 2017-64954 A | 06 April 2017 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H101998062626 A
- WO 2019065999 A
- WO 2019065803 A
- JP 2023107488 A